# EUROPÄISCHE PATENTSCHRIFT

(11) **EP 3 526 610 B1**
(45) Veröffentlichungstag und Bekanntmachung des Hinweises auf die Patenterteilung: **15.06.2022**
(21) Anmeldenummer: 17780709.6
(22) Anmeldetag: 04.10.2017
(51) Int. Cl.: G01P 5/165, G01F 1/46

(54) **STAUDRUCKSONDE FÜR EINE SENSOREINRICHTUNG UND FLUGKÖRPER MIT EINER SENSOREINRICHTUNG**
DYNAMIC PRESSURE PROBE FOR A SENSOR DEVICE, AND MISSILE HAVING A SENSOR DEVICE
SONDE DE PITOT POUR UN DISPOSITIF CAPTEUR ET ENGIN VOLANT POURVU D'UN DISPOSITIF CAPTEUR

(30) Priorität: 11.10.2016 DE 102016119359
(43) Veröffentlichungstag der Anmeldung: 21.08.2019
(73) Patentinhaber: Deutsches Zentrum für Luft- und Raumfahrt e.V., 51147 Köln (DE)
(72) Erfinder: ORTELT, Markus, 74223 Flein (DE)
(74) Vertreter: DTS Patent- und Rechtsanwälte Schnekenbühl und Partner mbB
(86) Internationale Anmeldenummer: PCT/EP2017/075202
(87) Internationale Veröffentlichungsnummer: WO 2018/069113

(56) Entgegenhaltungen:
- WO-A1-99/09376
- WO-A1-2016/000008
- US-A- 2 858 698

## Beschreibung

Die Erfindung betrifft eine Staudrucksonde für eine Sensoreinrichtung zum Bestimmen der Relativgeschwindigkeit eines Gegenstandes und eines diesen umgebenden Mediums, insbesondere zur Flugdatenermittlung bei einem Flugkörper, wobei die Staudrucksonde einen Körper mit einer Wand umfasst, in der eine Einströmöffnung gebildet ist und die einen Innenraum einfasst.

Außerdem betrifft die vorliegende Erfindung einen Flugkörper, insbesondere ein Luftfahrzeug, mit einer Sensoreinrichtung, umfassend eine Staudrucksonde.

Eine Staudrucksonde der eingangs genannten Art kann beispielsweise bei einem relativ zu einem Umgebungsmedium bewegbaren Gegenstand zum Einsatz kommen, insbesondere einem Flugkörper wie zum Beispiel einem Luftfahrzeug und insbesondere Flugzeug. Auf Basis der anhand der die Staudrucksonde umfassenden Sensoreinrichtung können als relevante Flugdaten zum Beispiel die angezeigte Eigengeschwindigkeit und bevorzugt die wahre oder die kalibrierte Eigengeschwindigkeit des Flugkörpers ermittelt werden. Die Staudrucksonde kann beispielsweise als "Pitot-Rohr" oder "Pitot-Sonde" bezeichnet werden, wobei im vorliegenden Fall eine derartige Gattungsbezeichnung als nicht-einschränkend für die Erfindung anzusehen ist, welche sich durch die Merkmale der Patentansprüche definiert.

Staudrucksonden in der Luftfahrt sind von hoher Relevanz für die Flugsicherheit, weswegen bei größeren Luftfahrzeugen eine Mehrzahl von Staudrucksonden zum Einsatz kommt. Anhand der redundanten Information besteht die Möglichkeit, flugrelevante Kenngrößen, ermittelt anhand von der Mehrzahl von Staudrucksonden, auf Übereinstimmung zu prüfen, Fehler oder Betriebsstörungen festzustellen, Gegenmaßnahmen erforderlichenfalls einzuleiten oder Kalibrierungen durchzuführen. Problematisch ist zum Beispiel ein Eisansatz oder die Anlagerung von Partikeln, die den Einströmquerschnitt oder den Querschnitt des Innenraums verringern und auf diese Weise zu Messfehlern führen oder eine Messung gar unmöglich machen.

Die WO 2016/000008 A1 beschreibt eine Vorrichtung und ein Verfahren zur Messung eines Drucks an einem Luftfahrzeug. Die Vorrichtung, insbesondere ein Pitotrohr, weist ein Rohr mit einer ersten Öffnung und eine erste Druckmesseinrichtung zur Bestimmung eines auf die erste Öffnung wirkenden Druckes auf. Um eine Blockade des Rohres zu vermeiden und gleichzeitig eine unterbrechungsfreie Messung zu ermöglichen, ist eine Fördereinrichtung vorgesehen, insbesondere eine Pumpe. Auf diese Weise kann in einem im Rohr befindlichen Medium, bei dem es sich um eine Frostschutzflüssigkeit handelt, ein zur ersten Öffnung hin abnehmender Druck erzeugt werden. Die Vorrichtung ist derart ausgelegt, dass, wenn das Rohr mit einem Medium gefüllt ist, auf welches ein zur ersten Öffnung hin abnehmender Druck wirkt, mit der ersten Druckmesseinrichtung ein auf die erste Öffnung wirkender Druck mittelbar über das Medium messbar ist.

Eine weitere Vorrichtung mit Pitotrohr zur Druckbestimmung ist in der US 2,858,698 beschrieben.

Aufgabe der vorliegenden Erfindung ist es, eine Staudrucksonde und einen Flugkörper bereitzustellen, unter deren Einsatz bzw. bei dem eine höhere Betriebssicherheit besteht.

Diese Aufgabe wird durch eine erfindungsgemäße Staudrucksonde für eine Sensoreinrichtung mit den Merkmalen von Anspruch 1 gelöst.

Bei der erfindungsgemäßen Staudrucksonde sind ein den Innenraum einfassender Außenkörper und ein zumindest teilweise im Innenraum angeordneter, den Messraum einfassender Innenkörper vorgesehen. Durch die Einströmöffnung hindurch kann das Fluid längs einer Einströmrichtung in den Messraum strömen. Durch die Durchgänge des Innenkörpers hindurch kann ein Schutzfluid in den Messraum eingeleitet werden. Ablagerungen von Partikeln, Flüssigkeitstropfen, Eis etc. können vom Schutzfluid erfasst und abgelöst werden. Ein Zusetzen der Staudrucksonde durch Partikel, Vereisung, Flüssigkeitstropfen oder dergleichen kann auf diese Weise wirkungsvoll unterbunden und die Betriebssicherheit gesteigert werden. Bei der erfindungsgemäßen Staudrucksonde besteht vorteilhafterweise die Möglichkeit, eine dem Medium entgegengerichtete Strömung des Schutzfluides aus dem Messraum heraus bereitzustellen. Ablagerungen können auf diese Weise wirkungsvoll vom Schutzfluid erfasst und dadurch gewissermaßen "weggespült" werden.

Als vorteilhaft erweist es sich, dass an oder in der Wand eine Eintrittsöffnung oder ein Anschluss für die Zufuhr des Schutzfluides angeordnet oder gebildet ist, durch die bzw. den hindurch Schutzfluid in einen Zwischenraum zwischen der Wand und dem Innenkörper strömen kann. Über eine Zufuhrleitung, die an den Anschluss angeschlossen ist oder über die Eintrittsöffnung in den Zwischenraum mündet, kann das Schutzfluid zugeführt werden. Der Innenkörper wird auf einer dem Messraum abgewandten Seite mit Schutzfluid beaufschlagt, das durch die Durchgänge hindurch in den Messraum einströmen kann.

Günstig ist es bei einer erfindungsgemäßen Umsetzung der Staudrucksonde, dass die Wand eine den Innenraum umgebende Seitenwand aufweist und wenn der Innenkörper bevorzugt formschlüssig im Außenkörper aufgenommen ist und sich an der Seitenwand abstützt, und dass zwischen der Seitenwand und dem Innenkörper Kanäle für das Schutzfluid gebildet sind, die mit den Durchgängen strömungsverbunden sind. Es ist beispielsweise eine Mehrzahl von Kanälen in Umfangsrichtung der Einströmrichtung oder der Achse zwischen dem Innenkörper und der Seitenwand gebildet. Die Kanäle sind bevorzugt gleichmäßig voneinander beabstandet. Die Kanäle verlaufen vorzugsweise achsparallel. Im Bereich der Eintrittsöffnung oder des Anschlusses kann beispielsweise ein Ringkanal vorhanden sein, um die Mehrzahl von Kanälen mit Schutzfluid zu beaufschlagen, wobei sich die Kanäle vorzugsweise über die gesamte oder einen Großteil der Länge des Innenkörpers erstrecken.

Ein Messelement einer die Staudrucksonde umfassenden Sensoreinrichtung ist zum Beispiel über eine Messleitung mit dem Messraum strömungsverbunden, um den Druck und/oder die Temperatur des Mediums zu ermitteln. Ein Messelement kann alternativ oder ergänzend auch im Messraum selbst angeordnet sein. Dementsprechend kann die Bestimmung des Druckes und/oder der Temperatur mit der erfindungsgemäßen Staudrucksonde selbst oder mit zusätzlichen Komponenten der Sensoreinrichtung vorgenommen werden, wobei die Staudrucksonde im letzteren Fall frei von einem Messelement oder Sensorelement sein kann.

Die Staudrucksonde kann aufgrund der Fähigkeit des Schutzfluides, durch die Durchgänge des Innenkörpers in den Messraum zu gelangen, als transpirative oder effusive Staudrucksonde bezeichnet werden.

Von Vorteil ist es, wenn als Schutzfluid ein Gas zum Einsatz kommt. "Gas" umfasst vorliegend auch ein Gasgemisch. Günstigerweise ist das Gas trocken, um den Eintrag von Feuchte in den Messraum zu verhindern. Das Gas kann angewärmt sein. Bei einem Flugkörper ist vorteilhafterweise vorgesehen, dass Gas aus einer Kabine oder insbesondere warmes oder heißes Triebwerkgas aus einem Triebwerk zugeführt wird.

Es kann vorgesehen sein, dass das Schutzfluid unter Druck zugeführt wird.

Die Staudrucksonde ist vorteilhafterweise zumindest abschnittsweise rohrförmig ausgestaltet, mit einem rohrförmigen Außenkörper und einem rohrförmigen und koaxial zum Außenkörper ausgerichteten Innenkörper. Der Außenkörper und der Innenkörper definieren eine gemeinsame Achse, die entlang das Medium in den Messraum einströmen kann. Die Achse ist bevorzugt senkrecht zur Ebene der Einströmöffnung ausgerichtet. Der Außenkörper und der Innenkörper weisen eine jeweilige Länge und einen jeweiligen Querschnitt zur Achse auf, wobei Außen- und Innenkörper bevorzugt längserstreckt ausgestaltet sind mit einer Länge, die die Abmessungen quer zur Achse signifikant übersteigt.

Vorliegend kann eine Bezugnahme auf eine Einströmrichtung des Mediums in den Messraum als eine Bezugnahme auf die vorstehend erwähnte Achse aufgefasst werden, wenn Außen- und Innenkörper eine derartige Achse definieren. "In der Einströmrichtung" kann daher vorliegend insbesondere als "in axialer Richtung" oder "achsparallel" aufgefasst werden.

Die Staudrucksonde kann beispielsweise einen, bezüglich einer Einströmrichtung des Mediums durch die Einströmöffnung in den Messraum, runden oder polygonalen Querschnitt aufweisen. Der Querschnitt kann zum Beispiel kreisrund oder rechteckförmig sein, insbesondere quadratisch. Die Querschnittsebene liegt insbesondere senkrecht zur vorstehend erwähnten Achse.

Es kann vorgesehen sein, dass die Eintrittsöffnung oder der Anschluss an einer der Einströmöffnung gegenüberliegenden Seite des Außenkörpers angeordnet ist. Dadurch wird es erleichtert, einen Druckgradienten für in den Messraum einströmendes Schutzfluid zu bilden, wodurch dieses wie vorstehend erwähnt aus dem Messraum herausströmen und dadurch Ablagerungen erfassen kann. "Gegenüberliegend" kann vorliegend insbesondere auch als "an einer der Einströmöffnung abgewandten Seite angeordnet" aufgefasst werden, zum Beispiel an einem gegenüberliegenden/abgewandten Ende oder Endbereich.

Bei einer vorteilhaften Umsetzung der Staudrucksonde kann vorgesehen sein, dass die Wand eine der Einströmöffnung gegenüberliegende Rückwand und der Innenkörper einen der Einströmöffnung gegenüberliegenden rückwärtigen Abschnitt aufweist, wobei zwischen der Rückwand und dem rückwärtigen Abschnitt ein mit den Durchgängen strömungsverbundener Zwischenraum gebildet ist. Der Zwischenraum ist insbesondere in Strömungsverbindung mit der Eintrittsöffnung oder dem Anschluss der Wand, so dass der Innenkörper am den Messraum begrenzenden rückwärtigen Abschnitt mit dem Schutzfluid beaufschlagbar ist.

Als vorteilhaft erweist es sich, wenn Durchgänge des Innenkörpers derart ausgebildet sind, dass das Schutzfluid in den Messraum quer und insbesondere senkrecht bezüglich einer Einströmrichtung des Mediums in den Messraum einströmt. Beispielsweise erfolgt die Einströmung senkrecht oder radial bezüglich der Achse des Innenkörpers. Der Innenkörper kann einen den Messraum umgebenden Abschnitt aufweisen, durch den hindurch das Medium quer und insbesondere senkrecht zur Einströmrichtung strömen kann.

Optional kann vorgesehen sein, dass Durchgänge des Innenkörpers derart ausgebildet sind, dass das Schutzfluid in den Messraum entgegen einer Einströmrichtung des Mediums in den Messraum einströmt. Insbesondere strömt das Schutzfluid axial oder achsparallel in den Messraum ein, beispielsweise durch den vorstehend erwähnten rückwärtigen Abschnitt des Innenkörpers hindurch.

Günstig ist es, wenn sich der Innenkörper über die gesamte Länge oder im Wesentlichen die gesamte Länge des Innenraumes erstreckt, wobei der Innenkörper vorzugsweise über die gesamte oder im Wesentlichen die gesamte Länge mit Durchgängen versehen ist oder Durchgänge aufweist. Ablagerungen können dadurch über die gesamte oder im Wesentlichen die gesamte Länge vom Schutzfluid erfasst und entfernt werden.

Alternativ oder ergänzend ist es zur Erzielung einer entsprechenden Wirkung von Vorteil, wenn sich der Innenkörper entlang des gesamten oder im Wesentlichen gesamten Innenumfanges der Wand erstreckt. Dabei ist der Innenkörper vorzugsweise entlang des gesamten oder im Wesentlichen gesamten Innenumfangs mit Durchgängen versehen oder weist solche auf.

Bei einer vorteilhaften Umsetzung ist es günstig, wenn der Innenkörper einen über den Rand der Einströmöffnung aus dem Innenraum ragenden vorderen Abschnitt aufweist, der Durchgänge für das Schutzfluid umfasst, die in vom Innenraum wegweisender Richtung ausgerichtet sind. Der vordere Abschnitt kann zum Beispiel den Rand überdecken und diesen außenseitig überfangen. Vorteilhafterweise sind die Durchgänge entgegengesetzt zu einer Einströmrichtung des Mediums in den Messraum ausgerichtet. Die Durchgänge sind vorzugsweise achsparallel ausgerichtet, wobei in Umfangsrichtung der Achse eine Mehrzahl von Durchgängen vorhanden sein kann, die vorzugsweise gleichmäßig voneinander beabstandet sind. Es kann eine Mehrzahl von Durchgängen mit unterschiedlichem Abstand zur Achse in radialer Richtung vorhanden sein. Von Vorteil ist es, wenn Austrittsöffnungen der Durchgänge am vorderen Abschnitt an einer Außenseite der Staudrucksonde angeordnet sind. Das Schutzfluid kann aus dem Messraum heraus entgegen der Einströmrichtung strömen, um eine Stirnseite des vorderen Abschnitts herum und an dessen Außenseite weg von der Einströmöffnung. Ablagerungen am Innenkörper und insbesondere Messraum können dadurch wirkungsvoll verhindert werden.

Bevorzugt sind Durchgänge des Innenkörpers gleichmäßig voneinander längs einer Einströmrichtung des Mediums in den Messraum beabstandet.

Alternativ oder ergänzend kann vorgesehen sein, dass die Durchgänge des Innenkörpers gleichmäßig voneinander entlang eines den Messraum einfassenden Umfanges des Innenkörpers beabstandet sind.

Der Außenkörper, insbesondere dessen Wand, ist vorteilhafterweise gasdicht. Günstigerweise ist der Außenkörper, insbesondere dessen Wand, aus einem Metall gefertigt.

Als günstig erweist es sich, wenn der Innenkörper ganz oder teilweise, zumindest eines der Folgenden umfasst oder aus einem oder mehreren der Folgenden gefertigt ist, wobei natürlich auch Kombinationen möglich sind:
- einem porösen Material, wobei die Durchgänge durch die poröse Beschaffenheit des Materials ausgebildet sind. Das Einbringen von gesonderten Durchgängen in den Innenkörper ist nicht erforderlich. Das Schutzfluid kann durch die Poren des porösen Materials hindurchströmen und auf diese Weise in den Messraum geleitet werden. Beispielsweise ist das poröse Material ein Sintermaterial.
- einem Verbundwerkstoff, insbesondere einem Faserverbundwerkstoff. Beispielsweise wird ein kohlenfaserverstärkter Kunststoff (KFK) oder eine Faserkeramik (CMC, Ceramic Matrix Composite) eingesetzt. Faserverbundwerkstoffe weisen beispielsweise die Eigenschaft auf, dass die die Fasern einbettende Matrix porös und damit durchlässig für ein gasförmiges Schutzfluid ist. Die Porosität ist derart beschaffen, dass die Gasströmung eher in der Ebene der Fasern erfolgt und senkrecht zu dieser Ebene deutlich geringer ist. Diese porösen Eigenschaften des Faserverbundwerkstoffes können zur herstellungstechnisch einfachen Fertigung des Innenkörpers genutzt werden. Durch Bereitstellen eines Hülsenkörpers aus einem Faserverbundwerkstoff mit einer Achse senkrecht zur Ebene der Fasern sind dadurch im Innenkörper Durchgänge von der Außenseite in den Messraum vorhanden. Die Faserlagen sind axial voneinander beabstandet. Bei dem vorstehend erwähnten vorderen Abschnitt kann vorgesehen sein, dass dieser als Hülse aus einem Faserverbundwerkstoff gefertigt ist, wobei deren Achse in der oder parallel zur Ebene der Fasern ausgerichtet ist. Dies gibt die Möglichkeit, Durchgänge parallel zur Achse des Innenkörpers bereitzustellen, so dass das Schutzfluid an die Außenseite des vorderen Abschnitts strömen kann.

- einem metallischen Material, das vorliegend insbesondere auch metallische Legierungen umfassen kann. Beispielsweise kommt ein poröser Metallschaum oder ein poröses Sintermetall zum Einsatz;
- einem Kunststoffmaterial;
- einem keramischen Material, zum Beispiel einem faserkeramischen Material (CMC, Ceramic Matrix Composite), das eine mikroporöse Beschaffenheit zur Ausbildung der Durchgänge aufweist.

Bei einer vorteilhaften Umsetzung der Staudrucksonde kann vorgesehen sein, dass die Durchgänge als Kanäle, beispielsweise als Bohrungen, im Innenkörper ausgestaltet sind.

Von Vorteil ist es, wenn die Staudrucksonde eine Heizeinrichtung umfasst zum Beheizen des Innenkörpers und/oder des Außenkörpers. Beispielsweise sind in Umfangsrichtung einer Achse des Innenkörpers bzw. Außenkörpers verlaufende Wicklungen, etwa einer Heizwendel, der Heizeinrichtungen vorhanden. Die Wicklungen können in den Innenkörper oder den Außenkörper eingebettet sein oder zwischen diesen verlaufen. Durch die Beheizung kann die Staudrucksonde besser vor Tau- oder Eisbildung geschützt werden.

Günstig ist es, wenn der Innenkörper derart mit Schutzfluid beaufschlagbar ist und/oder derart ausgestaltet ist, dass ein Volumenstrom an Schutzfluid und/oder der Druck des Schutzfluides, das durch die Durchgänge in den Messraum strömt, von einer der Einströmöffnung abgewandten Seite des Innenkörpers zu einer der Einströmöffnung zugewandten Seite abnimmt. Der Volumenstrom an Schutzfluid und/oder der Druck des Schutzfluides an der der Einströmöffnung abgewandten Seite des Innenkörpers ist dadurch größer als an der der Einströmöffnung zugewandten Seite des Innenkörpers. Es bildet sich infolgedessen ein Druckgradient, der eine Strömung des Schutzfluides nach sich zieht, die dem einströmenden Medium entgegengerichtet ist. Vorteilhafterweise strömt das Schutzfluid durch die Einströmöffnung aus der Staudrucksonde hinaus. Ablagerungen werden vom Schutzfluid erfasst und gewissermaßen "weggespült". Die Änderung des Volumenstroms und/oder des Drucks des Schutzfluides abhängig vom jeweiligen Abstand zur Einströmöffnung kann schrittweise oder kontinuierlich erfolgen.

Es kann vorgesehen sein, dass die Querschnittsfläche und/oder die Anzahl der Durchgänge je Längeneinheit am Innenkörper mit wachsendem Abstand von der Einströmöffnung zunimmt.

Alternativ oder ergänzend kann vorgesehen sein, dass der Innenkörper eine Mehrzahl von aneinander gefügten Segmenten mit Durchgängen umfasst, wobei sich die Querschnittsfläche und/oder die Anzahl der Durchgänge je Längeneinheit an unterschiedlichen Segmenten voneinander unterscheiden.

Bei beiden vorstehend erwähnten vorteilhaften Ausführungsformen besteht die Möglichkeit, den Volumenstrom an Schutzfluid und/oder dessen Druck an einer der Einströmöffnung abgewandten Seite größer auszugestalten als an einer der Einströmöffnung zugewandten Seite.

Wie bereits erwähnt kann das Schutzfluid ein bevorzugt trockenes Gas sein, wobei hierunter vorliegend auch ein Gasgemisch verstanden werden kann.

Alternativ kann ein flüssiges Schutzfluid vorgesehen sein.

Bei einer vorteilhaften Ausführungsform der Staudrucksonde kann vorgesehen sein, dass in der Wand an der der Einströmöffnung gegenüberliegenden Seite eine Ausströmöffnung zum Ausströmen des Mediums aus dem Messraum gebildet ist und dass der Innenkörper eine Durchgangsöffnung für das Medium aufweist. Die Wand kann eine Rückwand umfassen, in der die Ausströmöffnung gebildet ist. Alternativ kann vorgesehen sein, dass die Wand frei von einer Rückwand ist und der Außenkörper an der der Einströmöffnung gegenüberliegenden Seite vollständig geöffnet ist. Durch die Ausströmöffnung hindurch können Partikel wie Staub, Schmutz, Flüssigkeitströpfen o. ä. hindurchströmen, zu welchem Zweck auch der Innenkörper eine Durchgangsöffnung aufweist. Ablagerungen bilden sich nur mit geringer Wahrscheinlichkeit. Zusätzlich können bestehende Ablagerungen vom Schutzfluid erfasst und vom Innenkörper abgelöst werden. Derartige Ablagerungen können beispielsweise vom Medium mitgeführt und über die Ausströmöffnung aus dem Messraum entfernt werden.

Als günstig erweist es sich, wenn die Staudrucksonde ein an der Ausströmöffnung angeordnetes Schließelement umfasst, das von einer Schließstellung zum zumindest teilweisen Verschließen der Ausströmöffnung in eine Öffnungsstellung zum Freigeben der Ausströmöffnung überführbar ist. Dies erlaubt es, die Ausströmöffnung erforderlichenfalls freizugeben, damit Partikel und Flüssigkeit aus dem Messraum abgegeben werden können. Die Ausströmöffnung kann unter Ansteuerung des Schließelementes beispielsweise periodisch oder bedarfsabhängig in die Öffnungsstellung überführt werden. Im regulären Betrieb der Staudrucksonde kann das Schließelement die Schließstellung einnehmen, wodurch das Medium im Messraum besser aufgestaut werden kann. Das Schließelement ist beispielsweise eine schwenkbare Klappe oder ein Schieber.

Um ein Aufstauen des Mediums im Messraum zu vereinfachen, ist es von Vorteil, wenn der Innenkörper in Einströmrichtung des Mediums in den Messraum zumindest abschnittsweise eine Verjüngung aufweist. Darunter kann vorliegend insbesondere verstanden werden, dass der Innenkörper derart ausgestaltet ist, dass eine Querschnittsfläche des Messraumes quer zur Einströmrichtung abnimmt, zumindest über einen Abschnitt der Erstreckung des Innenkörpers längs der Einströmrichtung. Insbesondere nimmt eine Querschnittsfläche quer zur Achse des Innenkörpers in axialer Richtung ab, zumindest über einen Abschnitt der Erstreckung des Innenkörpers.

Wie eingangs erwähnt, betrifft die vorliegende Erfindung auch einen Flugkörper. Ein erfindungsgemäßer, die eingangs gestellte Aufgabe lösender Flugkörper umfasst eine Sensoreinrichtung mit einer Staudrucksonde der vorstehend genannten Art, wobei mit der Sensoreinrichtung der Druck und/oder die Temperatur des in den Messraum einströmenden Mediums ermittelbar ist.

Die Vorteile, die bereits im Zusammenhang mit der erfindungsgemäßen Staudrucksonde erwähnt wurden, können bei deren Einsatz in einem Flugkörper erzielt werden. Diesbezüglich kann auf die voranstehenden Erläuterungen verwiesen werden.

Vorteilhafte Ausführungsformen des Flugkörpers ergeben sich durch vorteilhafte Ausführungsformen der Staudrucksonde.

Der Flugkörper kann insbesondere ein Luftfahrzeug sein, beispielsweise ein Flugzeug.

Der Flugkörper kann bemannt oder unbemannt sein.

Es ist vorteilhafterweise eine Messleitung vorgesehen, über die ein extern zum Außenkörper angeordnetes Messelement der Sensoreinrichtung mit dem Messraum in Strömungsverbindung steht. Über die Messleitung können der Druck und/oder die Temperatur des Mediums zuverlässig vom Messelement bestimmt werden.

Günstig ist es, wenn eine an die Staudrucksonde angeschlossene Zufuhrleitung für Schutzfluid vorgesehen ist, die vorzugsweise mit dem Inneren einer Kabine, mit einem Triebwerk des Flugkörpers oder mit einem Vorratsbehälter in Strömungsverbindung steht oder bringbar ist. Dies gibt die Möglichkeit, angewärmtes oder vorgewärmtes Gas aus der Kabine oder dem Triebwerk als Schutzfluid zu verwenden. Vereisungen können durch warmes Gas abgelöst und abgeführt werden. Taubildung am Innenkörper kann durch warmes Gas verhindert werden.

Die Sensoreinrichtung kann eine weitere Staudrucksonde umfassen. Vorteilhafterweise können flugrelevante Kenngrößen anhand von Messdaten beider Staudrucksonden ermittelt werden. Besonders günstig ist es, wenn die flugrelevanten Kenngrößen auf Übereinstimmung überprüfbar sind. Die Überprüfung erfolgt vorzugsweise in Echtzeit. Dies gibt die Möglichkeit, eine Referenzbestimmung flugrelevanter Kenngrößen vorzunehmen. Die weitere Staudrucksonde der Sensoreinrichtung kann auf zuverlässige Funktion überprüft werden. Es besteht ferner die Möglichkeit einer gegenseitigen Kalibrierung der Staudrucksonden.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine schematische perspektivische Darstellung eines erfindungsgemäßen Flugkörpers, umfassend eine Sensoreinrichtung mit einer erfindungsgemäßen Staudrucksonde;
- Figur 2:: eine schematische Darstellung des Flugkörpers aus Figur 1;
- Figur 3:: eine schematische Schnittansicht der erfindungsgemäßen Staudrucksonde des Flugkörpers aus Figur 1;
- Figur 4:: eine Schnittansicht längs der Linie 4-4 in Figur 3;
- Figur 5:: eine Darstellung entsprechend Figur 4 bei einer weiteren bevorzugten Ausführungsform einer erfindungsgemäßen Staudrucksonde;
- Figur 6:: eine schematische Schnittansicht einer weiteren bevorzugten Ausführungsform einer erfindungsgemäßen Staudrucksonde;
- Figur 7:: eine schematische Schnittansicht einer weiteren bevorzugten Ausführungsform einer erfindungsgemäßen Staudrucksonde;
- Figur 8:: eine schematische Schnittansicht einer weiteren bevorzugten Ausführungsform einer erfindungsgemäßen Staudrucksonde;
- Figur 9:: eine Schnittansicht längs der Linie 9-9 in Figur 8;
- Figur 10:: eine Schnittansicht längs der Linie 10-10 in Figur 8;
- Figur 11:: eine Darstellung entsprechend Figur 9 bei einer weiteren bevorzugten Ausführungsform einer erfindungsgemäßen Staudrucksonde;
- Figur 12:: eine schematische Schnittansicht einer weiteren bevorzugten Ausführungsform einer erfindungsgemäßen Staudrucksonde;
- Figur 13:: eine schematische Schnittansicht einer weiteren bevorzugten Ausführungsform einer erfindungsgemäßen Staudrucksonde;
- Figur 14:: eine schematische Schnittansicht einer weiteren bevorzugten Ausführungsform einer erfindungsgemäßen Staudrucksonde mit einem eine Schließstellung einnehmenden Schließelement;
- Figur 15:: die Staudrucksonde aus Figur 14, wobei das Schließelement eine Öffnungsstellung einnimmt;
- Figur 16:: eine schematische Schnittansicht einer weiteren bevorzugten Ausführungsform einer erfindungsgemäßen Staudrucksonde mit einem eine Schließstellung einnehmenden Schließelement; und
- Figur 17:: die Staudrucksonde aus Figur 14, wobei das Schließelement eine Öffnungsstellung einnimmt.

Nachfolgend werden eine vorteilhafte Ausführungsform eines erfindungsgemäßen Flugkörpers sowie mehrere vorteilhafte Ausführungsformen einer erfindungsgemäßen Staudrucksonde erläutert. Für gleiche oder gleichwirkende Merkmale und Bauteile werden identische Bezugszeichen benutzt. Es wird, was die verschiedenartigen Ausführungsformen der Staudrucksonde angeht, nur auf die wesentlichen Unterschiede eingegangen. Die Staudrucksonden können jeweils als "Pitot-Rohr" bezeichnet werden.

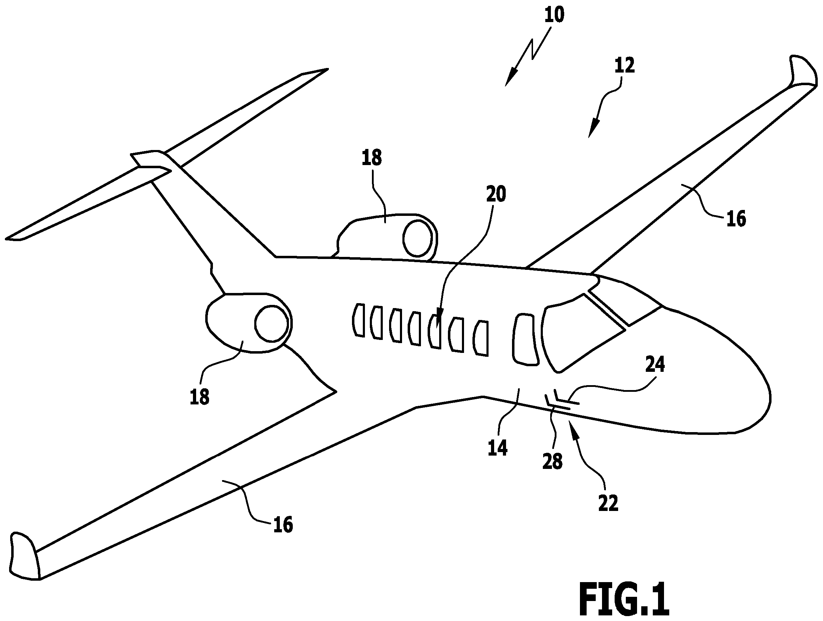

Figur 1 zeigt in schematischer perspektivischer Darstellung einen erfindungsgemäßen Flugkörper 10, der ausgestaltet ist als Flugzeug 12 mit einem Rumpf 14 und Tragflügeln 16. Das Flugzeug 12 weist mindestens ein Triebwerk 18 auf, bei dem es sich wie in der Zeichnung dargestellt um ein Strahltriebwerk handeln kann. Denkbar ist auch ein Propellertriebwerk. Der Rumpf 14 definiert eine Kabine 20 des Flugzeuges 12 für Flugzeugführer sowie gegebenenfalls Fluggäste.

Der Flugkörper 10 umfasst eine erfindungsgemäße Sensoreinrichtung 22. Die Sensoreinrichtung 22 weist eine erste bevorzugte Ausführungsform einer erfindungsgemäßen Staudrucksonde auf, die mit dem Bezugszeichen 24 gekennzeichnet ist. Ferner ist eine Auswerteeinheit 26 der Sensoreinrichtung 22 vorgesehen, eine weitere Staudrucksonde 28, die herkömmlich sein kann. Der vorliegenden Erfindung bleibt es allerdings vorbehalten, dass auch die Staudrucksonde 28 gemäß der vorliegenden Erfindung ausgestaltet ist.

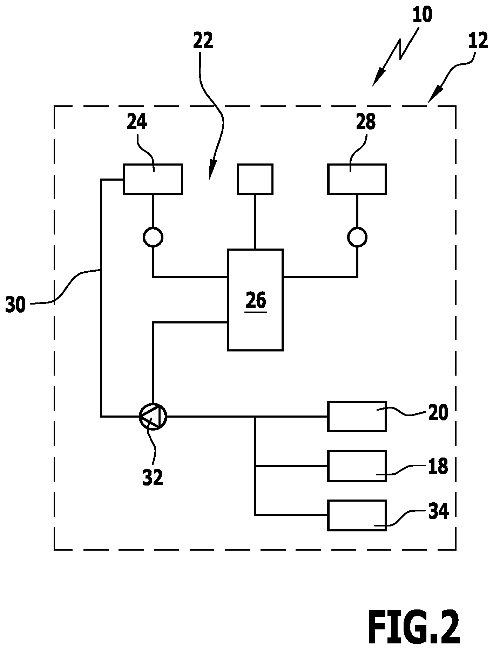

Das Flugzeug 12 umfasst eine Zufuhrleitung 30, die ausströmseitig wie nachfolgend erläutert an die Staudrucksonde 24 angeschlossen ist. Einströmseitig steht die Zufuhrleitung 30 mit der Kabine 20 in Strömungsverbindung. Ein Schutzfluid, insbesondere Luft und bevorzugt trockene Luft, kann der Staudrucksonde 24 über die Zufuhrleitung 30 von der Kabine 20 zugeleitet werden. In die Zufuhrleitung 30 kann ein Förderaggregat 32 geschaltet sein (Figur 2).

Alternativ oder ergänzend kann vorgesehen sein, dass die Zufuhrleitung 30 einströmseitig mit dem Triebwerk 18 in Strömungsverbindung steht. Weiter kann alternativ oder ergänzend vorgesehen sein, dass die Zufuhrleitung 30 einströmseitig mit einem Vorratsbehälter 34 für das Schutzfluid in Strömungsverbindung steht.

Das Schutzfluid, wie erwähnt insbesondere Luft und besonders bevorzugt trockene Luft, ist vorzugsweise aufgeheizt oder erwärmt und weist dabei eine deutlich über dem Taupunkt für Wasser liegende Temperatur auf.

Die Staudrucksonde 24, und in entsprechender Weise die Staudrucksonde 28, können auf an sich bekannte Weise am Flugzeug 12 festgelegt sein. Beispielsweise sind die Staudrucksonden 24, 28 am Rumpf 14 oder an den Tragflügeln 16 angebracht.

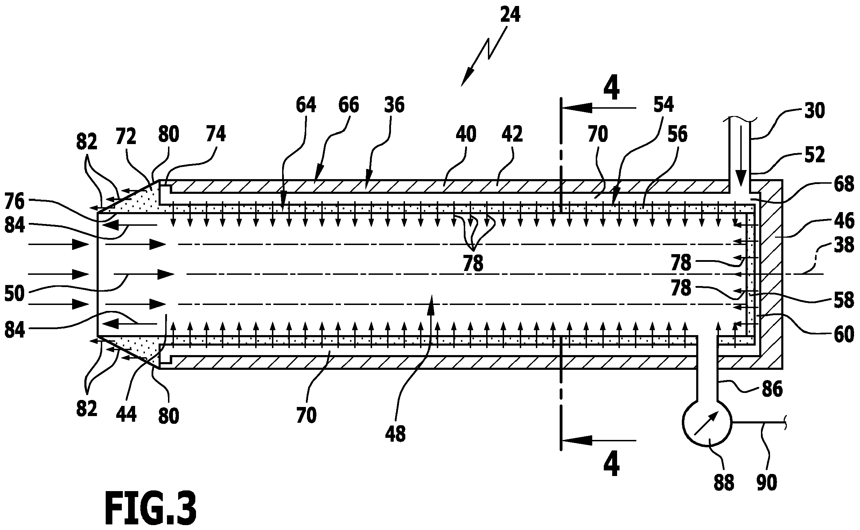

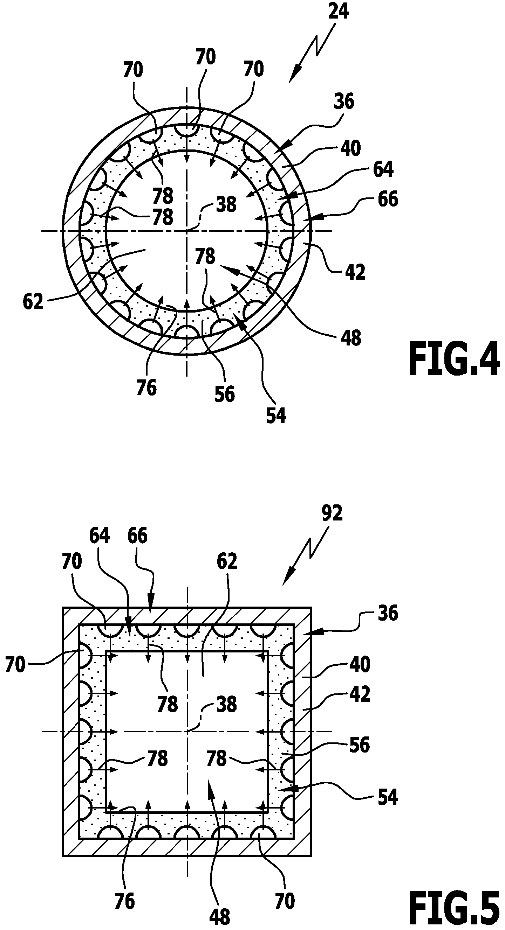

Unter Einsatz der Staudrucksonden 24, 28 ist es der Sensoreinrichtung 22 möglich, die Relativgeschwindigkeit des Flugzeuges 12 zu dem es umgebenden Medium zu ermitteln. Die Bestimmung von Flugdaten kann zum Beispiel die angezeigte Eigengeschwindigkeit, die tatsächliche Eigengeschwindigkeit oder die kalibrierte Eigengeschwindigkeit des Flugzeuges 12 umfassen. Als besonders vorteilhaft erweist sich dabei der Einsatz der erfindungsgemäßen Staudrucksonde 24, deren Aufbau nachfolgend unter Verweis auf die Figuren 3 und 4 beschrieben wird.

Die Staudrucksonde 24 umfasst einen Außenkörper 36. Der Außenkörper 36 ist rohrförmig ausgestaltet und definiert eine Achse 38. Senkrecht zur Achse 38 weist der Außenkörper 36 einen runden und insbesondere kreisrunden Querschnitt auf.

Der Außenkörper 36 umfasst eine Wand 40 mit einer die Achse 38 umgebenden Seitenwand 42. An einer Stirnseite des Außenkörpers 36 ist in der Wand 40 eine Einströmöffnung 44 gebildet. An der der Einströmöffnung 44 gegenüberliegenden Seite umfasst die Wand 40 eine geschlossene Rückwand 46, so dass der Außenkörper 36 insgesamt eine geschlossene Hülse bildet.

Über die Wand 40 fasst der Außenkörper 36 einen Innenraum 48 ein. Das das Flugzeug 12 umgebende Medium kann in einer Einströmrichtung 50 durch die Einströmöffnung 44 hindurch in den Innenraum 48 strömen. Die Einströmrichtung 50 verläuft axial oder achsparallel bezogen auf die Achse 38. Bezugnahmen auf die Achse 38 sind daher auch Bezugnahmen auf die Einströmrichtung 50.

An der Wand 40 ist ein Anschluss 52 für die Zufuhrleitung 30 gebildet. Der Anschluss 52 ist beispielsweise an der der Einströmöffnung 44 gegenüberliegenden Seite nahe an der Rückwand 46 angeordnet.

Der Außenkörper 36 ist vorzugsweise aus einem metallischen Material gefertigt und gasdicht ausgestaltet.

Die Staudrucksonde 24 umfasst ferner einen Innenkörper 54, der abschnittsweise im Innenraum 48 aufgenommen ist. Der Innenkörper 54 ist ebenfalls rohrförmig ausgestaltet und koaxial zum Außenkörper 36 ausgerichtet.

Der Innenkörper 54 ist im Verhältnis zum Außenkörper 36 so bemessen, dass er formschlüssig im Außenkörper 36 aufgenommen ist. Über einen die Achse 38 umgebenden Abschnitt 56 kann sich der Innenkörper 54 an der den Innenraum 48 begrenzenden Seitenwand 42 abstützen. Der Innenkörper 54 umfasst ferner einen rückwärtigen Abschnitt 58 an der der Einströmöffnung 44 gegenüberliegenden Seite, wobei der rückwärtige Abschnitt 58 nahe an der Rückwand 46 angeordnet ist. Der Innenkörper 54 bildet dadurch eine geschlossene Hülse.

Axial erstreckt sich der Innenkörper im Wesentlichen über die gesamte Länge des Innenraumes 48. In Umfangsrichtung der Achse 38 erstreckt sich der Innenkörper über den gesamten Innenumfang der Wand 40.

Zwischen der Rückwand 46 und dem rückwärtigen Abschnitt 58 ist ein Zwischenraum 60 vorhanden. Der Innenkörper 54 fasst auf diese Weise einen Messraum 62 ein, der Bestandteil des Innenraums 48 ist. Das Fluid kann durch die Einströmöffnung 44 in den Messraum 62 einströmen und darin aufgestaut werden.

Der Innenkörper 54 bildet mit dem den Messraum 62 umgebenden Abschnitt 56 und dem rückwärtigen Abschnitt 58 gewissermaßen eine Innenwand 64 der Staudrucksonde 24. Der Außenkörper 36 bildet mit der Seitenwand 42 und der Rückwand 46 gewissermaßen eine Außenwand 66 der Staudrucksonde 24.

Das über die Zufuhrleitung 30 zugeführte Gas gelangt in den Zwischenraum 60 und einen Zwischenraum 68, der zwischen der Seitenwand 42 und dem umgebenden Abschnitt 56 angeordnet ist. Der Zwischenraum 68 kann beispielsweise am Anschluss 52 einen Ringkanal aufweisen und umfasst ferner Kanäle 70, die zwischen der Seitenwand 42 und dem Abschnitt 56 gebildet sind (Figur 4). Die Kanäle 70 verlaufen vorzugsweise achsparallel und sind in Umfangsrichtung der Achse 38 gleichmäßig voneinander beabstandet.

Es besteht bei der Staudrucksonde 24 auf diese Weise die Möglichkeit, den Innenkörper 34 an der dem Messraum 62 abgewandten Seite mit dem gasförmigen Schutzfluid zu beaufschlagen, das über die Zufuhrleitung 30 und den Anschluss 52 in den Zwischenraum 60 und in die Kanäle 70 zugeführt wird.

Der Innenkörper 54 weist ferner einen vorderen Abschnitt 72 auf, der aus dem Innenraum 48 und über einen die Einströmöffnung 44 einfassenden Rand 74 hinausragt. Der vordere Abschnitt 72 ist im vorliegenden Fall von kegelstumpfförmiger Gestalt, wobei diese auch unterschiedlich ausfallen könnte. Es ist eine zentrale Durchgangsöffnung 76 vorhanden, die mit der Einströmöffnung 44 fluchtet. Durch die Durchgangsöffnung 76 hindurch kann das Medium in der Einströmrichtung 50 einströmen. Der vordere Abschnitt 72 ist so bemessen, dass er am Außenumfang mit dem Rand 74 und der Seitenwand 42 fluchtet. Dadurch bildet der vordere Abschnitt 72 gewissermaßen eine "Spitze" der Staudrucksonde 24.

Dem Rand 74 zugewandt kann der vordere Abschnitt 72 über die Kanäle 70 ebenfalls mit dem gasförmigen Schutzfluid beaufschlagt werden.

Der Innenkörper 54 ist im vorliegenden Fall bei der Staudrucksonde 24 aus einem porösen Material gefertigt. Beispielsweise ist das poröse Material ein Sintermaterial oder ein schaumförmiges Material (z. B. Sintermetall oder Metallschaum), das aufgrund seiner Porosität Durchgänge für das gasförmige Schutzfluid aufweist. Die Durchgänge geringen Querschnitts sind in den Figuren 3 bis 7 nicht gezeigt.

Bei einer bevorzugten Ausführungsform kann vorgesehen sein, dass der Innenkörper 54 aus einem Faserverbundwerkstoff mit in eine poröse Matrix eingebetteten Faserlagen gefertigt ist. Vorzugsweise ist dabei vorgesehen, dass der umgebende Abschnitt 56 und der rückwärtige Abschnitt 58 derart aus dem Faserverbundwerkstoff gefertigt sind, dass die Faserlagen am umgebenden Abschnitt 56 quer und insbesondere senkrecht zur Achse 38 ausgerichtet sind. Am rückwärtigen Abschnitt 58 sind die Faserlagen vorzugsweise in axialer Richtung ausgerichtet. Entsprechendes gilt für den vorderen Abschnitt 72. An diesem sind die Faserlagen vorzugsweise parallel zur Achse 38 ausgerichtet.

Bei einer vorteilhaften Ausführungsform kann der Innenkörper 54 aus einem porösen CMC-Werkstoff gefertigt sein (Ceramic Matrix Composite), einem faserkeramischen Material mit poröser Beschaffenheit.

Im Betrieb der Staudrucksonde 24 kann das gasförmige Schutzfluid über die Zufuhrleitung 30 zur Beaufschlagung des Innenkörpers 54 an der dem Messraum 62 abgewandten Seite einströmen. Durch die Durchgänge des Innenkörpers 54, beispielsweise des porösen Materials oder des Faserverbundwerkstoffes, strömt das gasförmige Schutzfluid in den Messraum 62 ein. Durch den Abschnitt 56 strömt Schutzfluid in radialer Richtung, durch den Abschnitt 58 entgegen der Einströmrichtung 50. Dies ist in den Figuren 3 und 4 durch Pfeile 78 symbolisiert.

Der vordere Abschnitt 72 wird im Bereich des Randes 74 ebenfalls mit dem Schutzfluid beaufschlagt. Das Schutzfluid strömt parallel zur Achse 38 entgegen der Einströmrichtung 50 durch die Durchgänge des Innenkörpers 54 und tritt über an der Außenseite 80 der Staudrucksonde 24 angeordnete Austrittsöffnungen aus (Pfeile 82).

Bei Staudrucksonden besteht die Gefahr, dass sich mit dem Medium mitgeführte Partikel wie Schmutz oder Staubteilchen im Innenraum 48 absetzen. Die Staudrucksonde kann verstopfen, was eine Bestimmung flugrelevanter Kenndaten erschwert oder gar unmöglich macht. Ein weiteres Problem besteht in der Vereisung von Staudrucksonden, es bildet sich durch mitgeführte Flüssigkeit eine Eisschicht im Innenraum oder im Bereich der Einströmöffnung der Staudrucksonde.

Diese Nachteile lassen sich bei der erfindungsgemäßen Staudrucksonde 24 durch das ausströmende Schutzfluid vermeiden. Durch das Schutzfluid entsteht längs des Innenkörpers 54 eine durch Pfeile 84 symbolisierte Strömung an Schutzfluid. Die Strömung des Schutzfluides ist der Einströmrichtung 50 des Mediums entgegengerichtet und erstreckt sich in Umfangsrichtung der Achse 38 entlang des gesamten umgebenden Abschnittes sowie entlang des gesamten Innenumfangs des vorderen Abschnittes 72 im Bereich der Durchgangsöffnung 76.

Es bildet sich ein Film an Schutzfluid. Anhaftende Partikel werden vom Schutzfluid mitgeführt und durch die Durchgangsöffnung 76 nach außen befördert. Die Strömung an Schutzfluid umläuft ferner die Stirnseite des vorderen Abschnittes 72. Schutzfluid strömt außenseitig ab, so dass sich auch im Bereich der Austrittsöffnungen am vorderen Abschnitt 72 keine Partikel anlagern.

Durch das bevorzugt trockene und erwärmte Gas besteht ferner die Möglichkeit, anhaftende Vereisungen zu erwärmen und abzutauen. Flüssigkeitströpfchen werden ebenfalls mit dem Schutzfluid abgeführt.

Die Sensoreinrichtung 22 weist eine Messleitung 86 auf, über die ein extern zum Außenkörper 36 angeordnetes Messelement 88 mit dem Messraum 62 in Strömungsverbindung steht. Das Messelement 88 ist seinerseits über eine Signalleitung 90 mit der Auswerteeinheit 26 gekoppelt. Alternativ kann vorgesehen sein, dass im Messraum 62 selbst ein Messelement der Sensoreinrichtung 22 angeordnet ist. Das Messelement extern zum Messraum 62 oder im Messraum 62 kann Bestandteil der Staudrucksonde 24 sein. Selbiges gilt für die Auswerteeinheit 26.

Mit dem Messelement 88 können der Druck und die Temperatur des aufgestauten Mediums ermittelt und der Auswerteeinheit 26 ein diesbezügliches Signal bereitgestellt werden. Die Auswerteeinheit 26 kann flugrelevante Kenngrößen, die anhand der Staudrucksonde 24 einerseits und anhand der Staudrucksonde 28 andererseits ermittelt werden, auf Übereinstimmung prüfen. Die erfindungsgemäße Staudrucksonde 24 kann dadurch als Referenz für die weitere Staudrucksonde 28 (herkömmlich oder erfindungsgemäß) eingesetzt werden. Die Betriebssicherheit des Flugzeuges 12 wird gesteigert.

Die Prüfung der Sensoreinrichtung 22 erfolgt vorzugsweise in Echtzeit. Alternativ oder ergänzend kann vorgesehen sein, dass eine Überprüfung der Staudrucksonden 24, 28 bei Inbetriebnahme des Flugzeuges 12 durchgeführt wird.

Im Falle von Abweichungen können Maßnahmen getroffen werden. Die Maßnahmen umfassen zum Beispiel die Reinigung oder den Austausch der Staudrucksonde 28 bis hin zur Verweigerung oder zum Entzug einer Flugerlaubnis für das Flugzeug 12.

Mit Verweis auf die Figuren 5 bis 17 werden nachfolgend weitere vorteilhafte Ausführungsformen der erfindungsgemäßen Staudrucksonde erläutert.

Figur 5 zeigt in einer der Figur 4 entsprechenden Weise eine Querschnittsansicht bezüglich der Achse 38 einer mit dem Bezugszeichen 92 belegten Staudrucksonde. Dabei weisen der Außenkörper 36 und der Innenkörper 54 einen rechteckigen und insbesondere quadratischen Querschnitt auf.

Bei andersartigen Ausführungsformen ist ein polygonaler, nicht-rechteckförmiger Querschnitt denkbar.

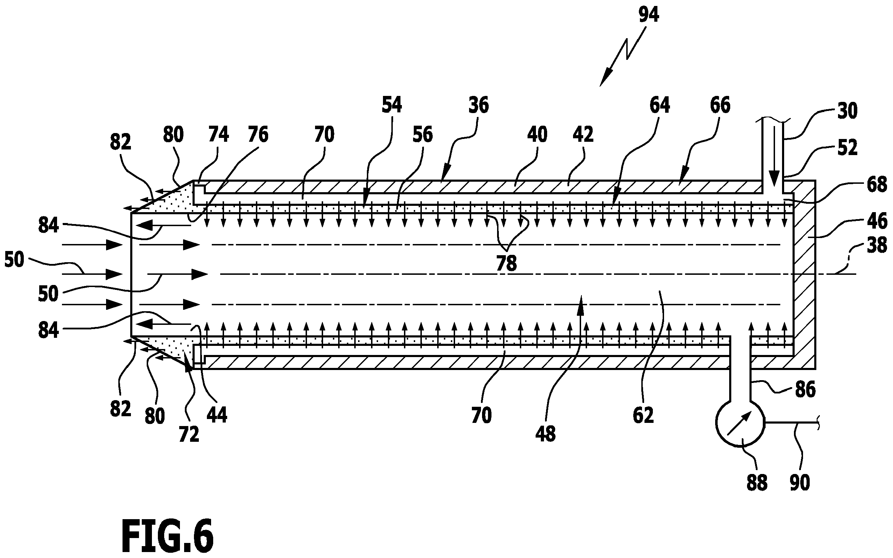

Die Figur 6 zeigt eine mit dem Bezugszeichen 94 belegte vorteilhafte Ausführungsform einer erfindungsgemäßen Staudrucksonde in einer der Figur 3 entsprechenden Darstellung. Bei der Staudrucksonde 94 entfällt der rückwärtige Abschnitt 58, so dass der Innenkörper 54 an der der Einströmöffnung 44 gegenüberliegenden Seite nicht geschlossen ist. Der Außenkörper umfasst die Rückwand 46.

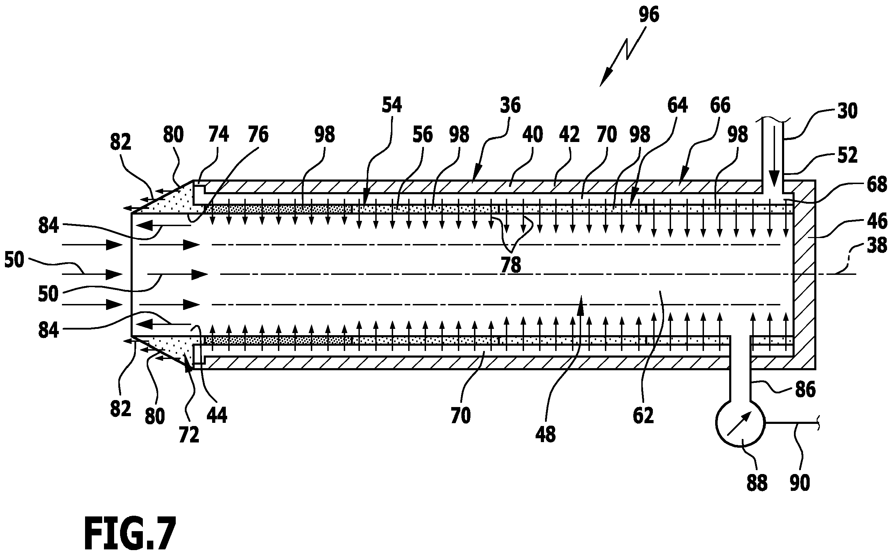

Figur 7 zeigt in einer der Figur 3 entsprechenden Weise eine mit dem Bezugszeichen 96 belegte vorteilhafte Ausführungsform einer erfindungsgemäßen Staudrucksonde. Bei der Staudrucksonde 96 ist der Innenkörper 54 im Bereich des umgebenden Abschnittes 56 in eine Mehrzahl (vorliegend vier Stück) von axial aneinander gefügten Segmenten 98 unterteilt.

Die Segmente 98 unterscheiden sich dadurch voneinander, dass sie unterschiedliche Porositäten aufweisen. Die Porosität des Segmentes 98, das den größten Abstand von der Einströmöffnung 44 aufweist, ist am größten. Das in Richtung der Einströmöffnung 44 vorgelagerte Segment 98 weist eine geringere Porosität auf, das diesem vorgelagerte Segment 98 eine noch geringere Porosität, und das der Einströmöffnung zugewandte Segment 98 weist die geringste Porosität auf. Die Anzahl und/oder der Querschnitt von Durchgängen des Innenkörpers 54 fallen daher in Richtung der Einströmöffnung 44 ab.

Dadurch ist die Möglichkeit gegeben, dass der Druck des Schutzfluides und der Volumenstrom an Schutzfluid an der der Einströmöffnung 44 gegenüberliegenden Seite des Innenkörpers 54 größer ist als an dessen der Einströmöffnung 44 zugewandten Seite. Dies ist in Figur 7 durch unterschiedliche Länge der Pfeile 78 symbolisiert. Der Druck des Schutzfluides und dessen Volumenstrom nehmen von der Rückwand 46 (der rückwärtige Abschnitt 58 entfällt bei der Staudrucksonde 96) bis zur Einströmöffnung 44 mit jedem Segment 98 ab. Es bildet sich dadurch ein Druckgradient, der die Strömung des Schutzfluides in Pfeilrichtung 84 begünstigt. Dies erweist sich als vorteilhaft für das Abführen der abgelösten Partikel aus dem Messraum 62.

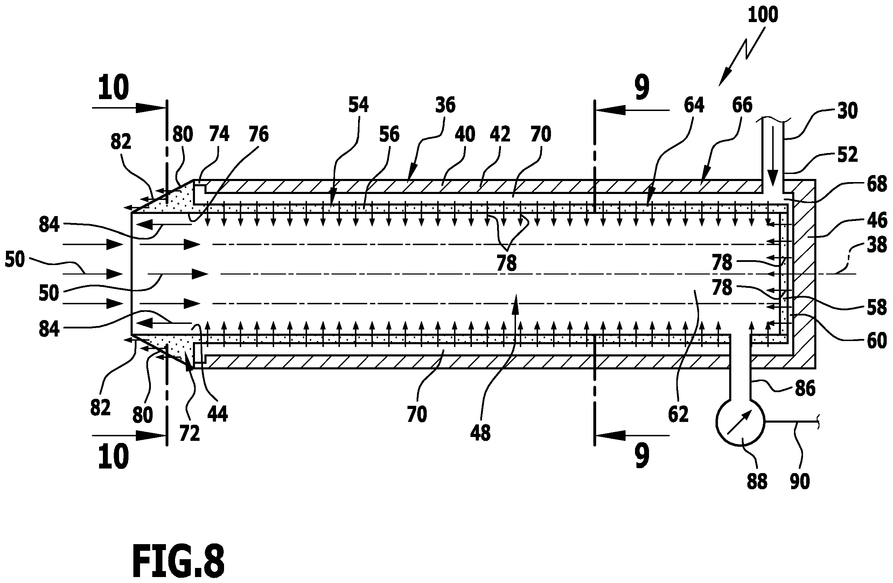

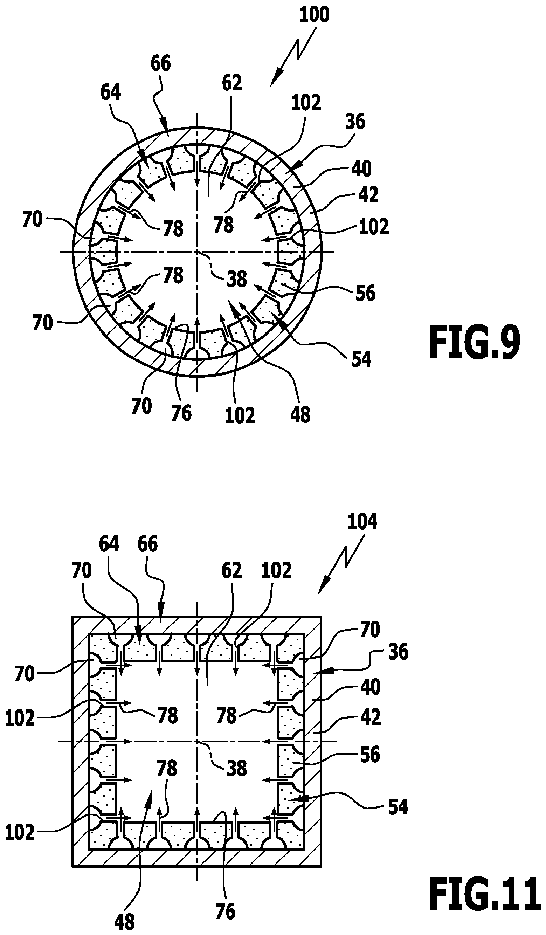

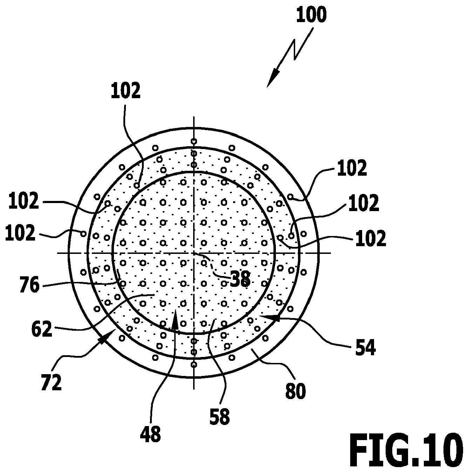

Die Figuren 8 und 9 zeigen in einer den Figuren 3 bzw. 4 entsprechenden Weise eine mit dem Bezugszeichen 100 belegte vorteilhafte Ausführungsform einer erfindungsgemäßen Staudrucksonde, wobei in Figur 10 zusätzlich eine schematische Schnittansicht längs der Linie 10-10 in Figur 8 dargestellt ist.

Die Staudrucksonde 100 unterscheidet sich von der Staudrucksonde 24 dadurch, dass die Durchgänge des Innenkörpers 54 für das gasförmige Schutzfluid nicht oder zumindest nicht allein durch die poröse Beschaffenheit des Innenkörpers 54 gebildet sind. Stattdessen sind Durchgänge 102 in den Innenkörper 54 eingebracht und beispielsweise als Bohrungen desselben ausgeführt. Die Durchgänge 102 sind in den Figuren 9 und 10 gezeigt und in Figur 8 der Übersichtlichkeit halber nicht dargestellt.

Die Durchgänge 102 sind am umgebenden Abschnitt 56 in Umfangsrichtung der Achse 38 angeordnet, radial bezüglich dieser ausgerichtet und zum Beispiel axial wie in Umfangsrichtung gleichmäßig voneinander beabstandet.

Am vorderen Abschnitt 72 ist eine Mehrzahl von Durchgängen 102 vorhanden, die achsparallel verlaufen und in Umfangsrichtung der Achse 38 gleichmäßig voneinander beabstandet sind. Durchgänge 102 sind entlang von vorliegend drei konzentrisch zur Achse 38 ausgerichteten Ringen angeordnet. Jeder Ring von Durchgängen 102 umfasst dieselbe Anzahl von Ringen, wobei die Durchgänge 102 unterschiedlicher Ringe radial bezüglich der Achse 38 positioniert sind.

Auch der rückwärtige Abschnitt 58 umfasst eine Mehrzahl von Durchgängen 102, die vorzugsweise gemäß einem regelmäßigen Muster am rückwärtigen Abschnitt 58 angeordnet und achsparallel ausgerichtet sind.

Zusätzlich zu den Durchgängen 102 kann bei der Staudrucksonde 100 vorgesehen sein, dass weitere Durchgänge aufgrund poröser Beschaffenheit des Innenkörpers 54 vorhanden sind.

Das gasförmige Schutzfluid strömt über die Durchgänge 102 radial (am Abschnitt 56) und entgegen der Einströmrichtung 50 (am Abschnitt 58) in den Messraum 62. Wie bei den vorangegangenen Ausführungsformen bildet sich entlang des Innenkörpers 54 eine Strömung von Schutzfluid aus dem Messraum 62 heraus (Pfeile 84).

Bei der Staudrucksonde 100 kann vorgesehen sein, dass der Innenkörper 54 derart beschaffen ist, dass der Druck des Schutzfluides und dessen Volumenstrom an der der Einströmöffnung 44 abgewandten Seite größer ist als an der der Einströmöffnung 44 zugewandten Seite. Dies kann beispielsweise dadurch umgesetzt werden, dass die Querschnittsfläche und/oder die Anzahl der Durchgänge 102 je Längeneinheit am Innenkörper insbesondere im Bereich des umgebenden Abschnittes 56 mit wachsendem Abstand von der Einströmöffnung 44 zunimmt. Die Zunahme kann stetig und kontinuierlich oder schrittweise erfolgen. Beispielsweise könnte der Innenkörper 54 wie bei der Staudrucksonde 96 aus einzelnen Segmenten 98 zusammengesetzt sein.

Die Figur 11 zeigt in einer der Figur 5 entsprechenden Weise eine mit dem Bezugszeichen 104 belegte vorteilhafte Ausführungsform einer erfindungsgemäßen Staudrucksonde. Bei der Staudrucksonde 104 sind wie bei der Staudrucksonde 100 Durchgänge 102 vorhanden. Der Querschnitt ist wie bei der Staudrucksonde 92 rechteckförmig und insbesondere quadratisch.

Abweichend von der schematischen Darstellung der Figuren 9 bis 11 können die Durchgänge 102 einen unterschiedlichen Querschnitt aufweisen, beispielsweise einen geringeren Querschnitt. Die Anzahl der Durchgänge 102 kann von der Darstellung abweichen.

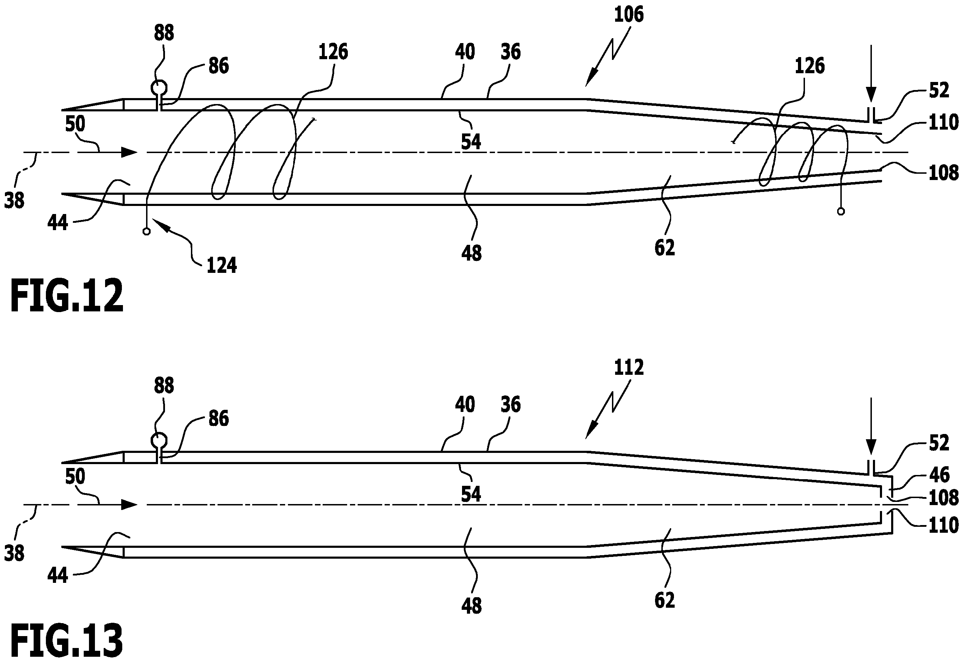

Die in den Figuren 12 bis 17 gezeigten Ausführungsformen sind nur schematisch dargestellt, wobei Einzelheiten des Außenkörpers 36 und des Innenkörpers 54 betreffend dessen Durchgänge nicht gezeigt sind.

Bei der Ausführungsform einer erfindungsgemäßen Staudrucksonde 106 gemäß Figur 12 entfällt die Rückwand 46 des Außenkörpers 36. Stattdessen ist eine Ausströmöffnung 108 in der Wand 40 gebildet. Der Innenkörper 54 weist nicht den rückwärtigen Abschnitt 58 auf, stattdessen ist eine Durchgangsöffnung 110 vorhanden. Das Medium kann dadurch durch die Staudrucksonde 106 hindurchströmen. Dies verringert die Wahrscheinlichkeit, dass sich Partikel anlagern. Die Neigung zur Vereisung wird gesenkt.

Zum Aufstauen des Mediums ist der Querschnitt des Messraumes 62 in der Einströmrichtung 50 über einen Abschnitt der Erstreckung des Innenkörpers 54 verringert. Der Innenkörper 54 weist zu diesem Zweck ungefähr im letzten Drittel seiner Erstreckung eine Verjüngung auf, um den Querschnitt des Messraumes 62 zu verringern und dadurch den Staudruck an der der Einströmöffnung 44 abgewandten Seite des Messraumes 62 zu erhöhen. Auch der Außenkörper 36 ist verjüngt ausgestaltet.

Je nach Höhe des Druckes des Schutzfluides kann bei der Staudrucksonde 106 vorgesehen sein, dass sich eine Strömung an Schutzfluid entgegen der Einströmrichtung 50 durch die Einströmöffnung 44 nach vorne ausbildet, oder das Schutzfluid kann nach Eintreten in den Messraum 62 und gegebenenfalls Lösen von Ablagerungen durch die Durchgangsöffnung 110 und die Ausströmöffnung 108 austreten. Entsprechendes gilt für die Ausführungsform gemäß Figur 13, 15 und 17 (die letzteren bei geöffnetem Schließelement).

Die erfindungsgemäße Staudrucksonde 112 gemäß Figur 13 ist an der der Einströmöffnung 44 gegenüberliegenden Seite ebenfalls geöffnet, wobei eine Ausströmöffnung 108 und eine Durchgangsöffnung 110 vorgesehen sind. Im Gegensatz zur Staudrucksonde 106 sind die Ausströmöffnung 108 und die Durchgangsöffnung 110 als Durchbrechungen der im Übrigen vorhandenen Rückwand 46 bzw. des rückwärtigen Abschnittes 58 ausgebildet.

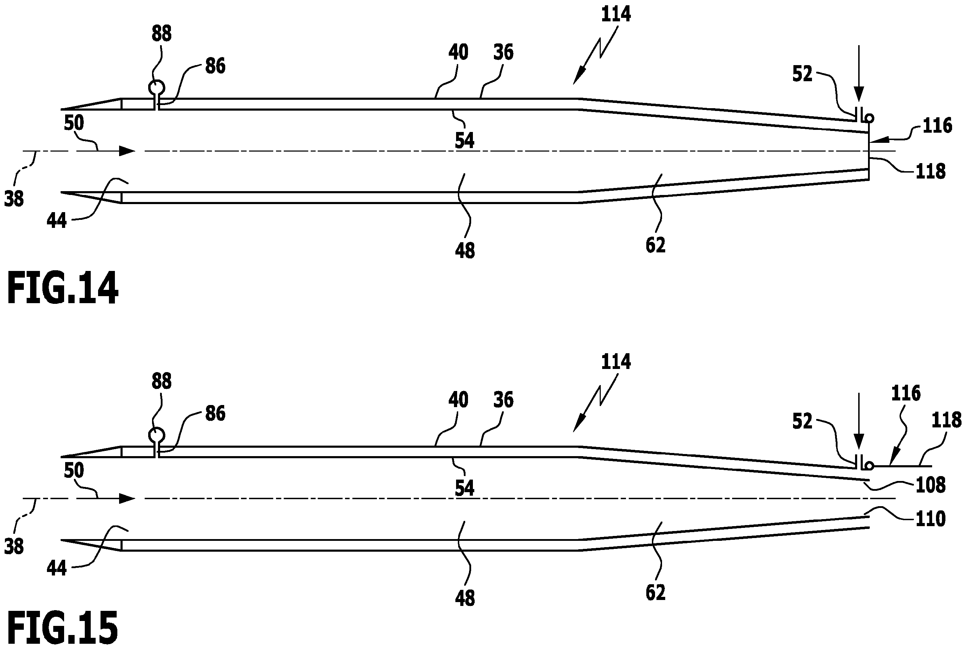

Eine in den Figuren 14 und 15 gezeigte und mit dem Bezugszeichen 114 belegte Ausführungsform einer erfindungsgemäßen Staudrucksonde weist wie die Ausführungsform gemäß Figur 12 die Ausströmöffnung 108 und die Durchgangsöffnung 110 auf. An den Öffnungen umfasst die Staudrucksonde 114 ein Schließelement 116. Das Schließelement 116 ist vorliegend ausgestaltet als schwenkbare Klappe 118, die von einer Schließstellung zum Verschließen der Ausströmöffnung 108 (Figur 14) in eine Öffnungsstellung zum Freigeben der Ausströmöffnung 108 (Figur 15) und umgekehrt überführbar ist.

Im Normalbetrieb der Staudrucksonde 114 ist die Ausströmöffnung 108 durch das Schließelement 116 verschlossen. Das Schließelement 116 kann in der Öffnungsstellung den Messraum 62 nach hinten freigeben, damit Partikel, Feuchte etc. abgeführt werden können. Das Schließelement 116 kann beispielsweise regelmäßig oder bedarfsabhängig betätigt werden. Zu diesem Zweck kann die Sensoreinrichtung 22 eine Steuereinheit zum Ansteuern eines Antriebes für das Schließelement 116 aufweisen. Die Ansteuerung kann alternativ von der Auswerteeinheit 26 vorgenommen werden.

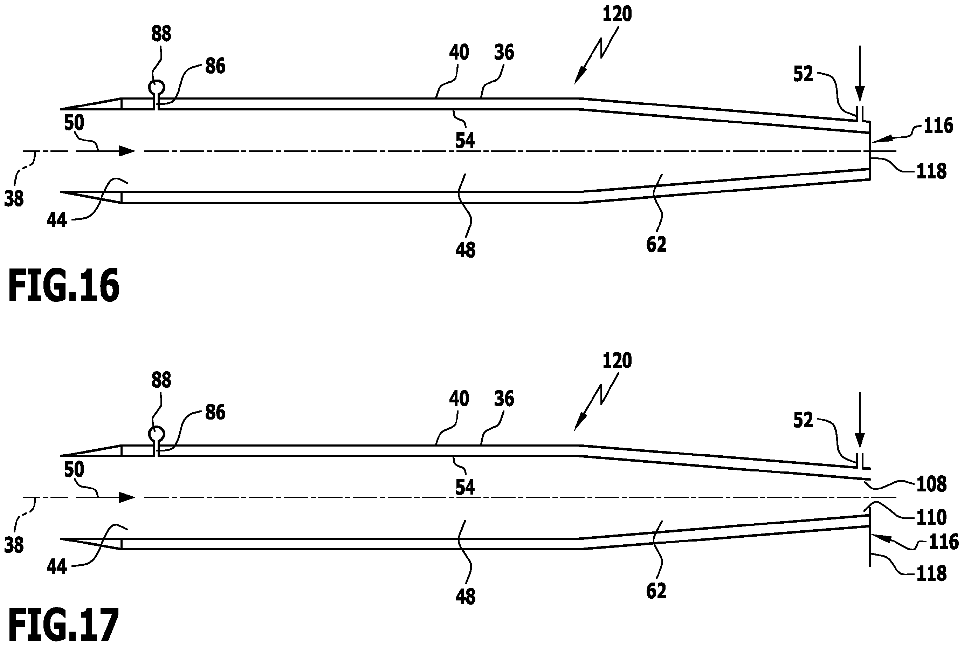

Die in den Figuren 16 und 17 gezeigte und mit dem Bezugszeichen 120 belegte vorteilhafte Ausführungsform der erfindungsgemäßen Staudrucksonde umfasst wie die Staudrucksonde 114 ein Schließelement 116. Das Schließelement 116 ist bei dieser Ausführungsform als Schieber 122 ausgestaltet, der beispielsweise senkrecht zur Achse 38 verschoben werden kann, um die Ausströmöffnung 108 wahlweise zu verschließen (Figur 16) oder freizugeben (Figur 17). Auch bei der Staudrucksonde 120 ist eine Ansteuerung eines Antriebes für das Schließelement 116 von der Sensoreinrichtung 22 möglich, zum Beispiel durch die Steuereinheit oder die Auswerteeinheit 26.

Die erfindungsgemäße Staudrucksonde kann eine Heizeinrichtung 124 umfassen. Die Heizeinrichtung 124 ist beispielhaft und abschnittsweise bei der in Figur 12 dargestellten Staudrucksonde 106 gezeigt, sie könnte jedoch selbstverständlich bei allen Staudrucksonden 24, 92, 94, 96, 100, 104, 112, 114 und 120 ebenfalls vorhanden sein.

Die Heizeinrichtung 124 weist beispielsweise eine Heizwendel mit Wicklungen 126 auf, die die Achse 38 umgeben und in der Seitenwand 42 oder im Abschnitt 56 des Innenkörpers 54 verlaufen. Denkbar ist auch eine Anordnung der Wicklungen 126 zwischen der Seitenwand 42 und dem Abschnitt 56. Figur 12 zeigt beispielhaft einige Wicklungen 126. Die Wicklungen 126 können mit Strom beaufschlagt werden, um die Staudrucksonde 106 elektrisch zu beheizen. Eine Ansteuerung der Heizeinrichtung 124 durch die Sensoreinrichtung 22 ist denkbar. Diese kann zu diesem Zweck eine Steuereinheit aufweisen, oder die Ansteuerung wird durch die Auswerteeinheit 26 vorgenommen.

### Bezugszeichen

- 10: Flugkörper
- 12: Flugzeug
- 14: Rumpf
- 16: Tragflügel
- 18: Triebwerk
- 20: Kabine
- 22: Sensoreinrichtung
- 24, 92, 94, 96, 100, 104, 106, 112, 114, 120: Staudrucksonde
- 26: Auswerteeinheit
- 28: Staudrucksonde
- 30: Zufuhrleitung
- 32: Förderaggregat
- 34: Vorratsbehälter
- 36: Außenkörper
- 38: Achse
- 40: Wand
- 42: Seitenwand
- 44: Einströmöffnung
- 46: Rückwand
- 48: Innenraum
- 50: Einströmrichtung
- 52: Anschluss
- 54: Innenkörper
- 56: umgebender Abschnitt
- 58: rückwärtiger Abschnitt
- 60: Zwischenraum
- 62: Messraum
- 64: Innenwand
- 66: Außenwand
- 68: Zwischenraum
- 70: Kanal
- 72: vorderer Abschnitt
- 74: Rand
- 76: Durchgangsöffnung
- 78: Pfeil
- 80: Außenseite
- 82: Pfeil
- 84: Pfeil
- 86: Messleitung
- 88: Messelement
- 90: Signalleitung
- 98: Segment
- 102: Durchgang
- 108: Ausströmöffnung
- 110: Durchgangsöffnung
- 116: Schließelement
- 118: Klappe
- 122: Schieber
- 124: Heizeinrichtung
- 126: Wicklung

## Patentansprüche

1. Staudrucksonde für eine Sensoreinrichtung zum Bestimmen der Relativgeschwindigkeit eines Gegenstandes und eines diesen umgebenden Mediums, insbesondere zur Flugdatenermittlung bei einem Flugkörper (10), wobei die Staudrucksonde (24; 92; 94; 96; 100; 104; 106; 112; 114; 120) einen Außenkörper (36) mit einer Wand (40) umfasst, in der eine Einströmöffnung (44) gebildet ist und die einen Innenraum (48) einfasst, sowie einen zumindest teilweise im Innenraum (48) angeordneten Innenkörper (54), der einen Messraum (62) als Bestandteil des Innenraumes (48) einfasst, wobei die Einströmöffnung (44) vom Medium durchströmbar und dieses im Messraum (62) aufstaubar ist, und wobei der Innenkörper (54) an einer dem Messraum (62) abgewandten Seite mit einem Schutzfluid, insbesondere einem Gas, beaufschlagbar ist und Durchgänge (102) umfasst, durch die hindurch Schutzfluid in den Messraum (62) einströmen kann, wobei an oder in der Wand (40) eine Eintrittsöffnung oder ein Anschluss (52) für die Zufuhr des Schutzfluides angeordnet oder gebildet ist, durch die bzw. durch den hindurch Schutzfluid in einen Zwischenraum (68) zwischen der Wand (40) und dem Innenkörper (54) strömen kann, wobei der Zwischenraum (68) mit den Durchgängen (102) strömungsverbundene Kanäle (70) für das Schutzfluid umfasst, und wobei die Wand (40) eine den Innenraum (48) umgebende Seitenwand (42) umfasst, zwischen der und dem Innenkörper (54) die Kanäle (70) gebildet sind.

2. Staudrucksonde nach Anspruch 1, **dadurch gekennzeichnet, dass** die Staudrucksonde (24; 92; 94; 96; 100; 104; 106; 112; 114; 120) zumindest abschnittsweise rohrförmig ausgestaltet ist, mit einem rohrförmigen Außenkörper (36) und einem rohrförmigen und koaxial zum Außenkörper (36) ausgerichteten Innenkörper (54), und/oder dass die Staudrucksonde (24; 92; 94; 96; 100; 104; 106; 112; 114; 120) einen, bezogen auf eine Einströmrichtung (50) des Mediums durch die Einströmöffnung (44) in den Messraum (62), runden oder polygonalen Querschnitt aufweist.

3. Staudrucksonde nach einem der voranstehenden Ansprüche, **dadurch gekennzeichnet, dass** die Eintrittsöffnung oder der Anschluss (52) an einer der Einströmöffnung (44) gegenüberliegenden Seite des Außenkörpers (36) angeordnet ist.

4. Staudrucksonde nach einem der voranstehenden Ansprüche, **dadurch gekennzeichnet, dass** der Innenkörper (54) formschlüssig im Außenkörper (36) aufgenommen ist und sich an der Seitenwand (42) abstützt, und/oder dass die Wand (40) eine der Einströmöffnung (44) gegenüberliegende Rückwand (46) aufweist und der Innenkörper (54) einen der Einströmöffnung (44) gegenüberliegenden rückwärtigen Abschnitt (58), wobei zwischen der Rückwand (46) und dem rückwärtigen Abschnitt (58) ein mit den Durchgängen (102) strömungsverbundener Zwischenraum (60) gebildet ist.

5. Staudrucksonde nach einem der voranstehenden Ansprüche, **dadurch gekennzeichnet, dass** Durchgänge (102) des Innenkörpers (54) derart ausgebildet sind, dass das Schutzfluid in den Messraum (62) quer und insbesondere senkrecht (78) bezüglich einer Einströmrichtung (50) des Mediums in den Messraum (62) einströmt und optional entgegen (78) einer Einströmrichtung (50) des Mediums in den Messraum (62).

6. Staudrucksonde nach einem der voranstehenden Ansprüche, **dadurch gekennzeichnet, dass** sich der Innenkörper (54):
- über die gesamte Länge oder im Wesentlichen die gesamte Länge des Innenraumes (48) erstreckt; und/oder
- entlang des gesamten oder im Wesentlichen gesamten Innenumfangs der Wand (40) erstreckt.

7. Staudrucksonde nach einem der voranstehenden Ansprüche, **dadurch gekennzeichnet, dass**:
- der Innenkörper (54) einen über einen Rand (74) der Einströmöffnung (44) aus dem Innenraum (48) ragenden vorderen Abschnitt (72) aufweist, der Durchgänge für das Schutzfluid umfasst, die in vom Innenraum (48) wegweisender Richtung ausgerichtet sind, insbesondere entgegengesetzt (82) zu einer Einströmrichtung (50) des Mediums in den Messraum (62); und/oder
- Austrittsöffnungen der Durchgänge am vorderen Abschnitt (72) an einer Außenseite (80) der Staudrucksonde (24; 92; 94; 96; 100; 104; 106; 112; 114; 120) angeordnet sind.

8. Staudrucksonde nach einem der voranstehenden Ansprüche, **dadurch gekennzeichnet, dass** die Durchgänge (102) des Innenkörpers (54) voneinander gleichmäßig beabstandet sind:
- längs einer Einströmrichtung (50) des Mediums in den Messraum (62); und/oder
- entlang eines den Messraum (62) einfassenden Umfanges des Innenkörpers (54).

9. Staudrucksonde nach einem der voranstehenden Ansprüche, **dadurch gekennzeichnet, dass** der Innenkörper (54), ganz oder teilweise, zumindest eines der Folgenden umfasst oder aus einem oder mehreren der Folgenden gefertigt ist:
- einem porösen Material, wobei die Durchgänge durch die poröse Beschaffenheit des Materials ausgebildet sind;
- einem Verbundwerkstoff, insbesondere einem Faserverbundwerkstoff;
- einem metallischen Material, beispielsweise einem Metallschaum oder einem Sintermetall;
- einem Kunststoffmaterial;
- einem keramischen Material, beispielsweise einem CMC-Werkstoff (Ceramic Matrix Composite).

10. Staudrucksonde nach einem der voranstehenden Ansprüche, **dadurch gekennzeichnet, dass** zumindest eines der Folgenden gilt:
- die Durchgänge (102) sind als Kanäle, beispielsweise als Bohrungen, im Innenkörper (54) ausgestaltet;
- die Staudrucksonde (24; 92; 94; 96; 100; 104; 106; 112; 114; 120) umfasst eine Heizeinrichtung (124) zum Beheizen des Innenkörpers (54) und/oder des Außenkörpers (36);
- der Innenkörper (54) ist derart mit Schutzfluid beaufschlagbar und/oder derart ausgestaltet, dass ein Volumenstrom an Schutzfluid und/oder der Druck des Schutzfluides, das durch die Durchgänge (102) in den Messraum (62) strömt, von einer der Einströmöffnung (44) abgewandten Seite des Innenkörpers (54) zu einer der Einströmöffnung (44) zugewandten Seite abnimmt.

11. Staudrucksonde nach Anspruch 10, **dadurch gekennzeichnet, dass**:
- die Querschnittsfläche und/oder die Anzahl der Durchgänge (102) je Längeneinheit am Innenkörper (54) mit wachsendem Abstand von der Einströmöffnung (44) zunimmt; und/oder
- der Innenkörper (54) eine Mehrzahl von aneinander gefügten Segmenten (98) mit Durchgängen (102) umfasst, wobei sich die Querschnittsfläche und/oder die Anzahl der Durchgänge (102) je Längeneinheit an unterschiedlichen Segmenten (98) voneinander unterscheidet.

12. Staudrucksonde nach einem der voranstehenden Ansprüche, **dadurch gekennzeichnet, dass** zumindest eines der Folgenden gilt:
- in der Wand (40) an der der Einströmöffnung (44) gegenüberliegenden Seite ist eine Ausströmöffnung (108) zum Ausströmen des Mediums aus dem Messraum (62) gebildet, und der Innenkörper (54) weist eine Durchgangsöffnung (110) für das Medium auf, wobei die Staudrucksonde (114; 116) vorzugsweise ein an der Ausströmöffnung (108) angeordnetes Schließelement (116) umfasst, das von einer Schließstellung zum zumindest teilweisen Verschließen der Ausströmöffnung in eine Öffnungsstellung zum Freigeben der Ausströmöffnung überführbar ist;
- der Innenkörper (54) weist in Einströmrichtung (50) des Mediums in den Messraum (62) zumindest abschnittsweise eine Verjüngung auf.

13. Flugkörper, insbesondere Luftfahrzeug, umfassend eine Sensoreinrichtung (22) mit einer Staudrucksonde (24; 92; 94; 96; 100; 104; 106; 112; 114; 120) nach einem der voranstehenden Ansprüche, wobei mit der Sensoreinrichtung (22) der Druck und/oder die Temperatur des Mediums im Messraum (62) ermittelbar ist.

14. Flugkörper nach Anspruch 13, **dadurch gekennzeichnet, dass** eine Messleitung (86) vorgesehen ist, über die ein extern zum Außenkörper (36) angeordnetes Messelement (88) der Sensoreinrichtung (22) mit dem Messraum (62) in Strömungsverbindung steht.

15. Flugkörper nach Anspruch 13 oder 14, **dadurch gekennzeichnet, dass**:
- eine an die Staudrucksonde (24; 92; 94; 96; 100; 104; 106; 112; 114; 120) angeschlossene Zufuhrleitung (30) für Schutzfluid vorgesehen ist, die vorzugsweise mit dem Inneren einer Kabine (20), mit einem Triebwerk (18) des Flugkörpers (10) oder einem Vorratsbehälter (34) in Strömungsverbindung steht oder bringbar ist; und/oder
- die Sensoreinrichtung (22) eine weitere Staudrucksonde (28) umfasst, wobei flugrelevante Kenngrößen, ermittelt anhand von Messdaten, die unter Nutzung beider Staudrucksonden (24; 92; 94; 96; 100; 104; 106; 112; 114; 120; 28) von der Sensoreinrichtung (22) gewonnen werden, auf Übereinstimmung prüfbar sind.

## Claims

1. Dynamic pressure probe for a sensor device for determining the relative speed of an object and a medium surrounding said object, in particular for gathering flight data on a flying object (10), wherein the dynamic pressure probe (24; 92; 94; 96; 100; 104; 106; 112; 114; 120) comprises an outer body (36) with a wall (40) in which an inflow opening (44) is formed and which encloses an inner space (48), as well as an inner body (54) which is arranged at least partially in the inner space (48) and which encloses a measuring space (62) as a constituent part of the inner space (48), wherein medium is able to flow through the inflow opening (44) and is able to be dammed in the measuring space (62), and wherein the inner body (54) is able to be acted upon with a protective fluid, in particular a gas, on a side remote from the measuring space (62) and comprises passages (102) through which protective fluid is able to flow into the measuring space (62), wherein arranged or formed on or in the wall (40) is an inlet opening or a connection (52) for the supply of the protective fluid, through which protective fluid is able to flow into an interspace (68) between the wall (40) and the inner body (54), wherein the interspace comprises channels (70) for the protective fluid, the channels (70) being flow-connected to the passages (102), and wherein the wall (40) has a side wall (42) surrounding the inner space (48), between which side wall (42) and the inner body (54) the channels (70) are formed.

2. Dynamic pressure probe in accordance with Claim 1, **characterized in that** the dynamic pressure probe (24; 92; 94; 96; 100; 104; 106; 112; 114; 120) is of tubular configuration at least in sections, with a tubular outer body (36) and a tubular inner body (54) aligned coaxial to the outer body (36), and/or that the dynamic pressure probe (24; 92; 94; 96; 100; 106; 112; 114; 120) has a round or polygonal cross section in relation to an inflow direction (50) of the medium through the inflow opening (44) into the measuring space (62).

3. Dynamic pressure probe in accordance with any one of the preceding Claims, **characterized in that** that the inlet opening or the connection (52) is arranged on a side of the outer body (36) opposite the inflow opening (44).

4. Dynamic pressure probe in accordance with any one of the preceding Claims, **characterized in that** the inner body (54) is accommodated in the outer body (36) by positive fit and is supported on the side wall (42), and/or that the wall (40) has a rear wall (46) opposite the inflow opening (44) and the inner body (54) a rearward section (58) opposite the inflow opening (44), wherein an interspace (60) flow-connected to the passages (102) is formed between the rear wall (46) and the rearward section (58).

5. Dynamic pressure probe in accordance with any one of the preceding Claims, **characterized in that** passages (102) of the inner body (54) are configured in such a way that the protective fluid flows into the measuring space (62) transverse and in particular perpendicular (78) in relation to an inflow direction (50) of the medium into the measuring space (62), and optionally counter (78) to an inflow direction (50) of the medium into the measuring space (62).

6. Dynamic pressure probe in accordance with any one of the preceding Claims, **characterized in that** the inner body (54):
- extends over the entire length or substantially the entire length of the inner space (48); and/or
- extends along the entire or substantially entire inner circumference of the wall (40).

7. Dynamic pressure probe in accordance with any one of the preceding Claims, **characterized in that**:
- the inner body (54) has a front section (72) which protrudes from the inner space (48) over a rim (74) of the inflow opening (44) and which comprises passages for the protective fluid which are aligned in the direction facing away from the inner space (48), in particular counter to an inflow direction (50) of the medium into the measuring space (62); and/or
- outlet openings of the passages at the front section (72) are arranged on an outer side (80) of the dynamic pressure probe (24; 92; 94; 96; 100; 104; 106; 112; 114; 120).

8. Dynamic pressure probe in accordance with any one of the preceding Claims, **characterized in that** the passages (102) of the inner body (54) are spaced uniformly apart from each other:
- along an inflow direction (50) of the medium into the measuring space (62); and/or
- along a circumference of the inner body (54) enclosing the measuring space (62).

9. Dynamic pressure probe in accordance with any one of the preceding Claims, **characterized in that** the inner body (54), entirely or partially, comprises at least one of the following or is made of one or more of the following:
- a porous material, wherein the passages are formed by the porous quality of the material;
- a composite material, in particular a fiber composite material;
- a metallic material, for example a metal foam or a sintered metal;
- a plastics material;
- a ceramic material, for example a CMC material (ceramic matrix composite).

10. Dynamic pressure probe in accordance with any one of the preceding Claims, **characterized in that** one of the following applies:
- the passages (102) are configured as channels, for example as bores, in the inner body (54);
- the dynamic pressure probe (24; 92; 94; 96; 100; 104; 106; 112; 114; 120) comprises a heating device (124) for heating the inner body (54) and/or the outer body (36);
- the inner body (54) is able to be acted upon with protective fluid in such a way and/or is configured in such a way that a volumetric flow of protective fluid and/or the pressure of the protective fluid which flows through the passages (102) into the measuring space (62) decreases from a side of the inner body (54) remote from the inflow opening (44) to a side facing toward the inflow opening (44).

11. Dynamic pressure probe in accordance with Claim 10, **characterized in that**
- the cross sectional area and/or the number of passages (102) per unit of length on the inner body (54) increases with increasing distance from the inflow opening (44); and/or
- the inner body (54) comprises a multitude of joined segments (98) with passages (102), wherein the cross sectional area and/or the number of passages (102) per unit of length on different segments (98) differs from each other.

12. Dynamic pressure probe in accordance with any one of the preceding Claims, **characterized in that** one of the following applies:
- an outflow opening (108) for the outflow of the medium from the measuring space (62) is formed in the wall (40) on the side opposite the inflow opening (44), and the inner body (54) has a through-opening (110) for the medium, preferably the dynamic pressure probe (114; 116) comprises a closing element (116) which is arranged at the outflow opening (108) and which is transferable from a closing position for at least partially closing the outflow opening into an opening position for unblocking the outflow opening;
- the inner body (54) has at least in sections a tapering in the inflow direction (50) of the medium into the measuring space (62).

13. Flying object, in particular aircraft, comprising a sensor device (22) with a dynamic pressure probe (24; 92; 94; 96; 100; 104; 106; 112; 114; 120) in accordance with any one of the preceding Claims, wherein the pressure and/or the temperature of the medium in the measuring space (62) is determinable with the sensor device (22).

14. Flying object in accordance with Claim 13, **characterized in that** a measuring conduit (86) is provided, via which a measuring element (88) of the sensor device (22) arranged external to the outer body (36) is in flow-connection with the measuring space (62).

15. Flying object in accordance with Claim 13 or 14, **characterized in that**:
- a supply conduit (30) for protective fluid connected to the dynamic pressure probe (24; 92; 94; 96; 100; 104; 106; 112; 114; 120) is provided which is preferably in or is able to be brought into flow-connection with the interior of a cabin (20), with an engine (18) of the flying object (10), or a reservoir (34); and/or
- the sensor device (22) comprises a further dynamic pressure probe (28), wherein characteristic variables relevant to flight, determined on the basis of measurement data which was obtained by the sensor device (22) using both dynamic pressure probes (24; 92; 94; 96; 100; 104; 106; 112; 114; 120; 28), are able to be checked for conformance.

## Revendications

1. Sonde de Pitot pour un dispositif capteur pour la détermination de la vitesse relative d'un objet et d'un milieu entourant celui-ci, en particulier pour la détermination de données de vol dans le cas d'un corps volant (10), où la sonde de Pitot (24; 92; 94; 96; 100; 104; 106; 112; 114; 120) comprend un corps externe (36) avec une paroi (40) dans laquelle une ouverture d'introduction (44) est formée et qui entoure un espace interne (48), ainsi qu'un corps interne (54) disposé au moins partiellement dans l'espace interne (48), qui entoure un espace de mesure (62) en tant que constituant de l'espace interne (48), où l'orifice d'entrée (44) peut être traversé par le milieu et celui-ci peut s'accumuler dans l'espace de mesure (62), et où le corps interne (54) peut être alimenté avec un fluide protecteur, en particulier un gaz, sur un côté opposé à l'espace de mesure (62) et comprend des passages (102) par lesquels le fluide protecteur peut s'introduire dans l'espace de mesure (62), où une ouverture d'entrée ou un raccordement (52) pour l'apport du fluide protecteur, par laquelle ou par lequel le fluide protecteur peut pénétrer dans un espace intermédiaire (68) entre la paroi (40) et le corps interne (54), est disposée ou formée sur ou dans la paroi (40), où l'espace intermédiaire (68) comprend des canaux (70) pour le fluide protecteur en liaison d'écoulement avec les passages (102), et où la paroi (40) comprend une paroi latérale (42) entourant l'espace interne (48), entre laquelle et le corps interne (54) sont formés les canaux (70).

2. Sonde de Pitot selon la revendication 1, **caractérisée en ce que** la sonde de Pitot (24; 92; 94; 96; 100; 104; 106; 112; 114; 120) est agencée de manière tubulaire au moins par sections, avec un corps externe (36) tubulaire et un corps interne (54) tubulaire et orienté coaxialement au corps externe (36), et/ou **en ce que** la sonde de Pitot (24; 92; 94; 96; 100; 104; 106; 112; 114; 120) présente une section transversale ronde ou polygonale par rapport à une direction d'introduction (50) du milieu par l'ouverture d'introduction (44) dans l'espace de mesure (62).

3. Sonde de Pitot selon l'une des revendications précédentes, **caractérisée en ce que** l'ouverture d'entrée ou le raccordement (52) est disposée sur un côté du corps externe (36) opposé à l'ouverture d'introduction (44).

4. Sonde de Pitot selon l'une des revendications précédentes, **caractérisée en ce que** le corps interne (54) est reçu par assemblage de forme dans le corps externe (36) et s'appuie sur la paroi latérale (42), et/ou **en ce que** la paroi (40) présente une paroi arrière (46) opposée à l'ouverture d'introduction (44) et le corps interne (54) une section arrière (58) opposée à l'ouverture d'introduction (44), où un espace intermédiaire (60) en liaison d'écoulement avec les passages (102) est formé entre la paroi arrière (46) et la section arrière (58).

5. Sonde de Pitot selon l'une des revendications précédentes, **caractérisée en ce que** les passages (102) du corps interne (54) sont formés de telle sorte que le fluide protecteur s'introduit dans l'espace de mesure (62) transversalement et en particulier perpendiculairement (78) par rapport à une direction d'introduction (50) du milieu dans l'espace de mesure (62) et éventuellement contre (78) une direction d'introduction (50) du milieu dans l'espace de mesure (62).

6. Sonde de Pitot selon l'une des revendications précédentes, **caractérisée en ce que** le corps interne (54):
- s'étend sur toute la longueur ou sensiblement toute la longueur de l'espace interne (48); et/ou
- s'étend sur toute ou sensiblement toute la circonférence interne de la paroi (40).

7. Sonde de Pitot selon l'une des revendications précédentes, **caractérisée en ce que**:
- le corps interne (54) présente une section avant (72) dépassant de l'espace interne (48) au-dessus d'un bord (74) de l'ouverture d'introduction (44), qui comprend des passages pour le fluide protecteur qui sont orientés dans une direction opposée à l'espace interne (48), en particulier à l'opposé (82) d'une direction d'introduction (50) du milieu dans l'espace de mesure (62); et/ou
- des ouvertures de sortie des passages sont disposées sur la section avant (72) au niveau d'un côté externe (80) de la sonde de Pitot (24; 92; 94; 96; 100; 104; 106; 112; 114; 120).

8. Sonde de Pitot selon l'une des revendications précédentes, **caractérisée en ce que** les passages (102) du corps interne (54) sont régulièrement espacés les uns des autres:
- selon une direction d'introduction (50) du milieu dans l'espace de mesure (62); et/ou
- le long d'une circonférence du corps interne (54) entourant l'espace de mesure (62).

9. Sonde de Pitot selon l'une des revendications précédentes, **caractérisée en ce que** le corps interne (54), totalement ou partiellement, comprend au moins l'un des suivants ou est fabriqué en un ou plusieurs des suivants:
- un matériau poreux, où les passages sont formés par la nature poreuse du matériau;
- un matériau composite, en particulier un matériau composite fibreux;
- un matériau métallique, par exemple une mousse métallique ou un métal fritté;
- un matériau synthétique;
- un matériau céramique, par exemple un matériau CMC (Ceramic Matrix Composite).

10. Sonde de Pitot selon l'une des revendications précédentes, **caractérisée en ce qu'**au moins l'un des suivants s'applique:
- les passages (102) sont conçus sous forme de canaux, par exemple sous forme d'alésages, dans le corps interne (54);
- la sonde de Pitot (24; 92; 94; 96; 100; 104; 106; 112; 114; 120) comprend un dispositif de chauffage (124) pour chauffer le corps interne (54) et/ou le corps externe (36);
- le corps interne (54) peut être alimenté avec du fluide protecteur de telle sorte et/ou est conçu de telle sorte qu'un débit volumique de fluide protecteur et/ou la pression du fluide protecteur, qui s'écoule à travers les passages (102) dans l'espace de mesure (62), decline depuis un côté du corps interne (54) opposé à l'ouverture d'introduction (44) jusqu'à un côté orienté vers l'ouverture d'introduction (44).

11. Sonde de Pitot selon la revendication 10, **caractérisée en ce que**:
- l'aire en section transversale et/ou le nombre des passages (102) par unité de longueur sur le corps interne (54) augmente au fur et à mesure que la distance par rapport à l'ouverture d'introduction (44) augmente; et/ou
- le corps interne (54) comprend une pluralité de segments (98) joints les uns aux autres avec des passages (102), où l'aire en section transversale et/ou le nombre des passages (102) diffère par unité de longueur sur des segments (98) différents.

12. Sonde de Pitot selon l'une des revendications précédentes, **caractérisée en ce qu'**au moins l'un des suivants s'applique:
- dans la paroi (40) au niveau du côté opposé à l'ouverture d'introduction (44) est formée une ouverture de sortie (108) pour l'écoulement du milieu hors de l'espace de mesure (62), et le corps interne (54) présente une ouverture de passage (110) pour le milieu, où la sonde de Pitot (114; 116) comprend de préférence un élément de fermeture (116) disposé sur l'ouverture de sortie (108), qui peut passer d'une position de fermeture pour la fermeture au moins partielle de l'ouverture de sortie à une position d'ouverture pour le dégagement de l'ouverture de sortie;
- le corps interne (54) présente au moins par sections un rétrécissement dans la direction d'introduction (50) du milieu dans l'espace de mesure (62).

13. Corps volant, en particulier véhicule aérien, comprenant un dispositif capteur (22) avec une sonde de Pitot (24; 92; 94; 96; 100; 104; 106; 112; 114; 120) selon l'une des revendications précédentes, où la pression et/ou la température du milieu dans l'espace de mesure (62) peut être déterminée avec le dispositif capteur (22).

14. Corps volant selon la revendication 13, **caractérisé en ce qu'**il est prévu une conduite de mesure (86) par le biais de laquelle un élément de mesure (88) du dispositif capteur (22) disposé de manière externe au corps externe (36) est en liaison d'écoulement avec l'espace de mesure (62).

15. Corps volant selon la revendication 13 ou 14, **caractérisé en ce que**:
- il est prévu une conduite d'apport (30) pour du fluide protecteur raccordée à la sonde de Pitot (24; 92; 94; 96; 100; 104; 106; 112; 114; 120), qui est de préférence en liaison d'écoulement ou peut être mise en liaison d'écoulement avec l'intérieur d'une cabine (20), avec un moteur (18) du corps volant (10) ou avec un récipient de stockage (34); et/ou
- le dispositif capteur (22) comprend une autre sonde de Pitot (28), où des paramètres pertinents pour le vol, déterminés à l'aide de données de mesure qui sont obtenues par le dispositif capteur (22) à l'aide des deux sondes de Pitot (24; 92; 94; 96; 100; 104; 106; 112; 114; 120; 28), peuvent être vérifiés en ce qui concerne la concordance.
